(19) Europäisches Patentamt
European Patent Office
Office européen des brevets

(11) **EP 3 692 348 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **18780131.1**

(22) Anmeldetag: **04.10.2018**

(51) Internationale Patentklassifikation (IPC):
**G01J 3/50** (2006.01)   **G01J 3/10** (2006.01)
**G01J 3/46** (2006.01)

(52) Gemeinsame Patentklassifikation (CPC):
**G01J 3/463; G01J 3/10; G01J 3/504**

(86) Internationale Anmeldenummer:
**PCT/EP2018/077048**

(87) Internationale Veröffentlichungsnummer:
**WO 2019/068828 (11.04.2019 Gazette 2019/15)**

(54) **VERFAHREN UND SYSTEM ZUM BESTIMMEN EINER MEHRZAHL VON FARBGÜTE-INDIKATOREN FÜR EINE FARBKONTROLLE EINES LACKS**

METHOD AND SYSTEM FOR DETERMINING A NUMBER OF COLOUR QUALITY INDICATORS FOR A COLOUR CONTROL OF A VARNISH

PROCÉDÉ ET SYSTÈME DE DÉTERMINATION D'UNE PLURALITÉ DES INDICATEURS DE QUALITÉ DE COULEUR POUR UN CONTRÔLE COULEUR D'UN VERNIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2017 EP 17195024**

(43) Veröffentlichungstag der Anmeldung:
**12.08.2020 Patentblatt 2020/33**

(73) Patentinhaber: **BASF Coatings GmbH**
**48165 Münster (DE)**

(72) Erfinder:
• **VIGNOLO, Carlos**
**97080 Würzburg (DE)**

• **STEUFMEHL, Florian**
**48165 Münster (DE)**

(74) Vertreter: **BASF IP Association**
**BASF SE**
**GBI-C006**
**67056 Ludwigshafen (DE)**

(56) Entgegenhaltungen:
**WO-A2-2016/074801     US-A1- 2016 005 187**

• **Ppg: "Bumper color", , 22. August 2011 (2011-08-22), XP055465292, Gefunden im Internet:**
**URL:http://www.benspaintsupply.com/wp-content/uploads/2011/05/matchingbumpercolors.pdf [gefunden am 2018-04-06]**

EP 3 692 348 B1

**Beschreibung**

Die vorliegende Erfindung betrifft ein Verfahren und ein System zum Bestimmen einer Mehrzahl von Farbgüteindikatoren für eine Farbkontrolle einer Lackcharge auf Basis von Serienlackierungen, insbesondere von Fahrzeugkarossen und Karosserieanbauteilen.

Bei einer Farbtoneinstellung werden einem Lack verschiedene farbgebende Komponenten hinzugefügt und anschließend mit einer Farbreferenz (Farbtonvorlage) verglichen. Dazu wird traditionellerweise der gemischte Lack spektralphotometrisch vermessen und dadurch ermittelte Messwerte, d. h. bspw. farbmetrische Koordinaten, mit entsprechenden Messwerten der Farbreferenz verglichen. Insbesondere bei Effektlacken, die eine Anzahl Effektpigmente umfassen, ist ein aussagefähiger Vergleich zwischen einem jeweiligen Effektlack und einer jeweiligen Farbreferenz nur unter Verwendung von Messwerten, die unter verschiedenen Messgeometrien ermittelt werden, möglich. Dies bedeutet, dass, um einen Lack mit einer Farbreferenz zu vergleichen, eine Vielzahl von Messwerten für eine Vielzahl von Messgeometrien und ggf. für eine Mehrzahl von Lichtquellen bzw. Lichtarten ermittelt werden muss.

Im Stand der Technik sind Verfahren bekannt, die einen eingeschränkten Vergleich eines jeweiligen Lacks mit einer jeweiligen Farbtonvorlage, d. h. Farbreferenz, ohne Betrachtung ggf. vorhandener Effektpigmente für lediglich drei Messgeometrien vorsehen.

Die Druckschrift WO 2013/049796 A1 betrifft ein Verfahren zum Vergleichen eines Lacks mit einer Referenz, wobei als Referenz Farbcharakteristika einer Farbformel verwendet werden.

Die Druckschrift DE 102 08 696 A1 offenbart ein Verfahren, bei dem einer Metallicfarbe angenäherte Farben mittels Farbklassifikationscodes berechnet werden.

In der US-Druckschrift US 2011/013176 A1 wird ein Verfahren zum Ermitteln von Eigenschaften einer Oberfläche offenbart.

Aus der WO 2016/074801 A2 ist es bekannt, eine Kennzahl Q zu ermitteln, die eine Beurteilung einer Übereinstimmung eines Lacks mit einer Farbreferenz anhand einer Skala ermöglicht. Anhand der genannten Kennzahl Q lässt sich jedoch nicht das Verhalten des Lacks bei Aufbringen desselben auf unterschiedlichen Oberflächen unmittelbar ableiten. Wird der Lack bspw. auf eine Oberfläche einer Fahrzeugkarosserie, auf eine Oberfläche eines Fahrzeuganbauteils, wie bspw. auf einen Stoßfänger, und auf entsprechende Kontrollplatten, bspw. des Lackherstellers, aufgebracht, so kann das äußere Erscheinungsbild des Lacks auf den verschiedenen mit dem Lack lackierten Oberflächen durchaus variieren, d. h. der Lack zeigt ggf. von Oberfläche zu Oberfläche ein anderes Verhalten. Es wäre nunmehr wünschenswert, in einem derartigen Szenario handhabbare und zu Vergleichszwecken nutzbare Angaben zu der Qualität des Lacks, insbesondere des Lacks einer Charge, bereitstellen zu können.

Vor diesem Hintergrund hat sich die Erfindung die Aufgabe gestellt, ein Verfahren und ein System bereitzustellen, die jeweils eine schnelle und einfache Beurteilung einer Farbqualität eines Lacks bei Aufbringen desselben auf verschiedenen Oberflächen ermöglichen.

Zur Lösung der Aufgabe werden ein Verfahren und ein System zum Bestimmen einer Mehrzahl von unterschiedlichen Farbgüteindikatoren für eine Farbkontrolle eines Lacks, insbesondere einer Lackcharge, mit den Merkmalen der unabhängigen Patentansprüche bereitgestellt. Ausgestaltungen des erfindungsgemäßen Verfahrens bzw. des erfindungsgemäßen Systems sind den entsprechenden Unteransprüchen und der Beschreibung zu entnehmen.

Die voranstehend genannte Aufgabe wird gelöst durch den Gegenstand der unabhängigen Patentansprüche.

Insbesondere wird die voranstehend genannte Aufgabe dadurch gelöst, dass zunächst farbmetrische Koordinaten einer Farbreferenz und farbmetrische Koordinaten des Lacks, insbesondere einer Lackcharge, für eine Mehrzahl von unterschiedlichen mit dem Lack lackierten Oberflächenelementen und mit dem Lack durch einen Hersteller des Lacks lackierten Kontrolloberflächenelementen je mit einem Spektralphotometer für eine Anzahl Messgeometrien und eine Anzahl Lichtquellen ermittelt werden. Ausgehend davon werden für jede Messgeometrie der Anzahl Messgeometrien und jede Lichtquelle der Anzahl Lichtquellen jeweilige Farbdifferenzen bzw. Farbabstände aus den farbmetrischen Koordinaten der Farbreferenz und den jeweiligen farbmetrischen Koordinaten des Lacks für die Mehrzahl der mit dem Lack lackierten Oberflächenelemente und Kontrolloberflächenelemente berechnet. Die jeweiligen farbmetrischen Koordinaten werden mit je einem Gewichtungsfaktor normiert. Jeder der Mehrzahl der Farbgüteindikatoren wird letztlich mittels einer durch eine vorgegebene und für die Farbgüteindikatoren identische Abbildungsvorschrift definierte Abbildung von für die Anzahl Messgeometrien und die Anzahl Lichtquellen jeweils mittels eines für den jeweiligen Farbgüteindikator spezifischen mathematischen Zusammenhangs zwischen Farbdifferenzen von mindestens einem der Oberflächenelemente (zu der Farbreferenz) berechneten Funktionswerten auf einen Wert einer vorgegebenen für alle Farbgüteindikatoren identischen Skala bestimmt.

Der mathematische Zusammenhang für mindestens einen der Mehrzahl von Farbgüteindikatoren entspricht einem mathematischen Zusammenhang zwischen Farbdifferenz zu der Farbreferenz von mindestens einem der Oberflächenelemente und einem der Kontrolloberflächenelemente.

Die vorgegebene Skala ist für alle Farbgüteindikatoren identisch und erstreckt sich über ganzzahlige Zahlenwerte von 1 bis 8 bzw. Q1 bis Q8, wobei 1 bzw. Q1 eine schlechteste Einstufung und 8 bzw. Q8 entsprechend eine beste Einstufung des Lacks hinsichtlich einer für einen jeweiligen Farbgüteindikator charakteristischen Güte des Lacks darstellt. Alternativ dazu ist es auch möglich, dass jedem Farbgüteindikator eine für den jeweiligen Farbgüteindikator spezifische Skala zugeordnet ist bzw. wird. Die vorgegebene Abbildungsvorschrift ist zumindest für eine Untergruppe der Mehrzahl der Farbgüteindikatoren identisch und somit farbgüteindikatorübergreifend, wobei die Untergruppe mehr als einen Farbgüteindikator umfasst.

Ein Oberflächenelement bezeichnet im Rahmen der vorliegenden Offenbarung keine einzelne lackierte Oberfläche, sondern eine Gruppe von gleichen bzw. gleichartigen mit dem Lack lackierten Oberflächen. Demnach sind bspw. unter einem ersten Oberflächenelement mit dem Lack lackierte Oberflächen von Teilen eines Produkts, insbesondere von Karosserieteilen einer Fahrzeugkarosserie und unter einem zweiten Oberflächenelement mit dem Lack lackierte Oberflächen von Anbauteilen für das Produkt, insbesondere von Karosserieanbauteilen eines bestimmten Typs, wie bspw. eines Stoßfängers, zu subsummieren. Im Folgenden werden ein Teile eines Produkts, insbesondere Karosserieteile einer Fahrzeugkarosserie bzw. deren Oberflächen repräsentierendes Oberflächenelement mit OEM und ein Anbauteile für das Produkt, insbesondere Karosserieanbauteile eines bestimmten Typs repräsentierendes Oberflächenelement mit ASP bezeichnet.

Ein Kontrolloberflächenelement bezeichnet im Rahmen der vorliegenden Offenbarung eine Kontrollplatte, bspw. eines Lackherstellers, für Teile eines Produkts, insbesondere für Karosserieteile einer Fahrzeugkarosserie oder ein Anbauteil des Produkts, insbesondere für ein Karosserieanbauteil. Ein Kontrolloberflächenelement für Teile eines Produkts, insbesondere einer Fahrzeugkarosserie wird im Folgenden mit OEM_QC und ein Kontrolloberflächenelement für ein Anbauteil des Produkts, insbesondere für ein Karosserieanbauteil mit ASP_QC abgekürzt.

Eine Unterscheidung zwischen verschiedenen Oberflächenelementen ist erforderlich, da die verschiedenen von den jeweiligen verschiedenen Oberflächenelementen repräsentierten Oberflächen bzw. Teile in der Regel an unterschiedlichen Lackierstationen lackiert werden und zudem oft eine unterschiedliche Beschaffenheit und somit auch einen unterschiedlichen Untergrund, auf dem der Lack aufzutragen bzw. aufgetragen ist, aufweisen. Die konkret genannten und beschriebenen Oberflächenelemente OEM, ASP, bzw. Kontrolloberflächenelemente OEM_QC und ASP_QC stehen stellvertretend für in Struktur und Lackierbedingungen verschiedene, mit dem Lack einer Charge lackierte Oberflächen, die sich nach Struktur und nach Lackierbedingungen in jeweilige durch ein jeweiliges Oberflächenelement bzw. ein jeweiliges Kontrolloberflächenelement repräsentierbare Gruppen gliedern lassen. Lackierbedingungen betreffen dabei eine konkrete Lackierstation und weitere bei Durchführung der Lackierung herrschende Umstände, wie Temperatur, Luftfeuchtigkeit etc.

Eine Anzahl Messgeometrien umfasst mindestens eine Messgeometrie. Eine Anzahl Lichtquellen umfasst mindestens eine Lichtquelle. Die Begriffe "Lichtquelle" und "Lichtart" werden im Rahmen der vorliegenden Offenbarung synonym zueinander verwendet.

Unter einer Messgeometrie ist im Kontext des vorgestellten Verfahrens eine Messanordnung mit einem bestimmten Beleuchtungswinkel und einem in einem bestimmten Winkel bzw. Messwinkel zu einem mit einem jeweiligen Lack lackierten Oberflächenelement bzw. Kontrolloberflächenelement angeordneten Messinstrument, wie bspw. einem Spektralphotometer, insbesondere einem Mehrwinkelspektralphotometer, zu verstehen.

Unter farbmetrischen Koordinaten sind im Kontext der vorliegenden Erfindung Koordinaten in einem Farbraum zum Beschreiben einer Farbe oder Graustufe, insbesondere in einem L*a*b*-Farbraum oder einem L*C*H*-Farbraum zu verstehen.

Unter einer Farbdifferenz bzw. einem Farbabstand ist im Kontext der vorliegenden Erfindung ein Unterschied zwischen zwei Farben in einem Farbraum, insbesondere einem L*a*b*-Farbraum oder einem L*C*H*-Farbraum zu verstehen.

Der L*C*H*-Farbraum entspricht dem L*a*b-Farbraum mit der Ausnahme, dass anstelle kartesischer Koordinaten a* und b*, Zylinderkoordinaten C* für Buntheit und H* für Bunttonwinkel verwendet werden. Eine Helligkeit (L*) bleibt dabei unverändert.

Um einen jeweiligen Lack mit einer Farbreferenz, wie bspw. einem weiteren Lack, zu vergleichen, ist, wie bereits voranstehend erwähnt, aus WO 2016/074801 A2 bekannt, dass eine Kennzahl Q bestimmt bzw. berechnet wird, die einen Vergleich bzw. einen Qualitätswert einer Übereinstimmung des jeweiligen Lacks, d. h. bspw. eines Effektlacks oder eines Unilacks, mit der jeweiligen Farbreferenz in einer Skala, wie bspw. einer Schulnotenskala von 1 bis 8 bzw. Q1 bis Q8 ermöglicht bzw. angibt. Allerdings werden in der WO 2016/074801 A2 im Hinblick auf die Qualität des Lacks keine unterschiedlichen mit dem Lack lackierte Oberflächelemente betrachtet.

Zur Bestimmung der Kennzahl Q ist, wie auch bei dem erfindugsgemäßen Verfahren, vorgesehen, dass jeweilige farbmetrische Koordinaten bzw. Farbkoordinaten, die bspw. in dem L*a*b*-Farbraum angegeben werden, für sowohl den jeweiligen Lack als auch die jeweilige Farbreferenz unter verschiedenen Messgeometrien und/oder unter Verwendung verschiedener Lichtarten und/oder Lichtquellen, bspw. unter Verwendung eines Spektralphotometers, ermittelt werden. Anhand der für den jeweiligen Lack bzw. die jeweilige Farbreferenz ermittelten Farbkoordinaten kann für jede Messgeometrie, d. h. für jeden Messwinkel und/oder für jede Lichtart und/oder für jede Lichtquelle, wie auch erfindungsgemäß vorgesehen, eine entsprechende Farbdifferenz zwischen dem jeweiligen Lack und der jeweiligen Farbreferenz für achromatische Farben gemäß Formel (1) und für bunte Farben gemäß Formel (2) berechnet werden.

$$dE_{Lab}^{*2} = dL^{*2} + da^{*2} + db^{*2} \qquad (1)$$

mit

$$dL^* = L_S^* - L_R^*$$

$$da^* = a_S^* - a_R^*$$

$$db^* = b_S^* - b_R^*$$

wobei "*R*" für Referenz und "S" hier für Sample bzw. Probe und damit stellvertretend für die jeweiligen Oberflächenelemente OEM, ASP, bzw. Kontrolloberflächenelemente OEM_QC, ASP_QC steht.

$$dE_{LCH}^{*2} = dL^{*2} + dC^{*2} + dH^{*2} \qquad (2)$$

Eine Unterscheidung zwischen bunten und unbunten Farben kann bspw. gemäß DIN 6175-2 bestimmt werden. Ferner ist vorgesehen, dass in den Formeln (1) und (2) die jeweiligen gemessenen Farbkoordinaten normiert werden:

$$<dE_{Lab}> = \sqrt{<dL^*>^2 + <da^*>^2 + <db^*>^2} \qquad (3)$$

$$<dE_{LCH}> = \sqrt{<dL^*>^2 + <dC^*>^2 + <dH^*>^2} \qquad (4)$$

Um die jeweiligen gemessenen Farbkoordinaten zu normieren, kann bspw. Formel (5) verwendet werden.

$$<dX^*> = \frac{dX^*}{S_x} \qquad (5)$$

In Formel (5) wird ein normierter Wert $<dX^*>$ durch eine Division eines jeweiligen Werts $dX^*$, d. h. insbesondere eines Werts einer jeweiligen Variablen einer Farbdifferenz, durch eine jeweilige winkelspezifische Toleranz $S_x$ berechnet. Das bedeutet, dass gilt:

$$<dL^*> = \frac{dL^*}{S_L}; <da^*> = \frac{da^*}{S_a}; <db^*> = \frac{db^*}{S_b}; <dC^*> = \frac{dC^*}{S_C}; <dH^*> = \frac{dH^*}{S_H}, \qquad (6)$$

wobei die Toleranzwerte bzw. Normierungsfaktoren $S_L$, $S_a$, $S_b$, $S_C$, $S_H$ von der Farbe, dem Messwinkel, einer Beschaffenheit des jeweiligen Oberflächenelements bzw. Kontrolloberflächenelements, d. h. des jeweiligen Untergrunds, auf den der Lack aufgebracht ist, etc. abhängig sein können.
Dabei kann eine Normierung bspw. gemäß Gleichungssystem (7) erfolgen.

$$S_L = S_a = S_b = 1/3$$

$$S_C = (1 + 0{,}048 \cdot C_R^*)/3 \qquad (7)$$

$$S_h = (1 + 0{,}014 \cdot C_R^*)/3$$

wobei $C_R^*$ die Buntheit, d. h. Chroma bzw. Sättigung einer Farbreferenz R im L*a*b*-Farbraum bezeichnet und mittels der Gleichung $C_R* = \sqrt{(a_R*)^2 + (b_R*)^2}$ zu berechnen ist, wobei der Index "R" auf die Farbreferenz R hinweist.

Die bestimmten Farbdifferenzen bzw. die normierten bestimmten Farbdifferenzen zwischen den jeweiligen mit dem Lack lackierten Oberflächenelementen bzw. den jeweiligen mit dem Lack lackierten Kontrolloberflächenelementen und der Farbreferenz für die verschiedenen Messgeometrien und/oder die verschiedenen Lichtarten bzw. die verschiedenen Lichtquellen werden nun erfindungsgemäß verwendet, um ein Verhalten des Lacks nach dessen Aufbringen auf die verschiedenen Oberflächenelemente zu analysieren. Dabei werden zur Bestimmung eines jeweiligen Farbgüteindikators die berechneten Farbdifferenzen von jeweils mindestens einem der verschiedenen Oberflächenelemente zu der Farbreferenz miteinander in eine für den jeweiligen Farbgüteindikator spezifische Beziehung gesetzt. "In Beziehung setzen" bedeutet dabei, dass die jeweiligen Farbdifferenzen als Variablen in eine für den jeweiligen Farbgüteindikator spezifische mathematische Verknüpfung bzw. in einen für den jeweiligen Farbgüteindikator spezifischen mathematischen Zusammenhang, wie bspw. eine Subtraktion, eingesetzt werden, d. h. sie werden in einen mathematischen Zusammenhang zueinander gebracht. Jeweilige sich für die Anzahl Messgeometrien und die Anzahl Lichtquellen bei der Verknüpfung ergebende Funktionswerte werden gemäß einer durch die vorgegebene Abbildungsvorschrift definierte Abbildung sodann einem Skalenwert der erfindungsgemäß vorgegebenen Skala zugeordnet. Dieser Skalenwert entspricht dann dem jeweiligen Farbgüteindikator bzw. dessen Wert für den spezifischen Lack. Die Zuordnung der Funktionswerte zu einem Skalenwert erfolgt dadurch, dass zunächst pro Messgeometrie und Lichtquelle ein Funktionswert gemäß dem jeweiligen farbgüteindikatorspezifischen mathematischen Zusammenhang berechnet wird und dann die Funktionswerte für die Anzahl Messgeometrien und die Anzahl Lichtquellen miteinander, bspw. durch Summenbildung und/oder durch Mittelwertbildung und/oder Maximalwertfindung, verknüpft werden und die so realisierten Verknüpfungen gemäß der vorgegebenen Abbildungsvorschrift bestimmte für jeden Skalenwert charakteristische Bedingungen erfüllen müssen, um dem jeweiligen Skalenwert zugeordnet zu werden.

In die für den jeweiligen Farbgüteindikator vorgesehene mathematische Verknüpfung fließen dabei für jede Messgeometrie und/oder jede Lichtquelle jeweils separat ermittelte Farbdifferenzen ein, die für das mindestens eine bei dem jeweiligen Farbgüteindikator zu berücksichtigende Oberflächenelement bzw. Kontrolloberflächenelement bestimmt wurden. Die Farbgüteindikatoren LPI, BPI und API, die im Folgenden noch näher erläutert werden, werden für OEM und ASP individuell und separat berechnet.

Um jeweilige Effekteigenschaften eines Effektlacks bei dem erfindungsgemäßen Verfahren zu berücksichtigen, ist vorgesehen, dass Glitzerabstände, d. h. Sparkle-Differenzen, und Grobheitsabweichungen, d. h. Graininess-Differenzen, gemessen mit einem Gonio-Effektspektralphotometer jeweils in Bezug zu der Farbreferenz berücksichtigt werden. Dazu werden jeweilige mit dem Gonio-Effektspektralphotometer gemessene Werte der Glitzerabstände bzw. der Grobheitsabweichungen bspw. gemäß Formel (5) normiert und neben den Farbdifferenzen pro Messgeometrie und Lichtquelle zur Berechnung weiterer Funktionswerte in den farbgüteindikatorspezifischen mathematischen Zusammenhang als Variablen <dX> eingesetzt und bei der Zuordnung jeweiliger berechneter Funktionswerte des jeweiligen Farbgüteindikators zu einem Skalenwert gemäß der im Voraus bereitzustellenden Abbildungsvorschrift berücksichtigt.

Zur Zuordnung jeweiliger Funktionswerte, gemessen unter verschiedenen Messgeometrien, zu einem jeweiligen Skalenwert des jeweiligen Farbgüteindikators ist vorgesehen, dass für einen Effektlack für jeweilige Messgeometrien berechnete und normierte Farbdifferenzen und/oder Glitzerabstände und/oder Grobheitsabweichungen durch eine Funktion, d. h. den farbgüteindikatorspezifischen mathematischen Zusammenhang, miteinander verrechnet werden und das Ergebnis einer derartigen Verrechnung ggf. unter Verwendung weiterer Bedingungen anhand einer durch die vorgegebene für alle Farbgüteindikatoren identische Abbildungsvorschrift definierte Abbildung bzw. Zuordnungsregel "rating", die bspw. Intervalle zwischen jeweiligen Skalenwerten regelt, einem diskreten Skalenwert des jeweiligen Farbgüteindikators zugeordnet wird. Das bedeutet, dass Farbdifferenzen gemäß der Funktion miteinander verrechnet, ggf. zusätzlich Glitzerabstände gemäß der Funktion miteinander verrechnet und weiter zusätzlich ggf. Grobheitsabstände gemäß der Funktion miteinander verrechnet werden und die so erhaltenen Funktionswerte gemäß der vorgegebenen Abbildungsvorschrift "rating" einem Skalenwert zugeordnet werden.

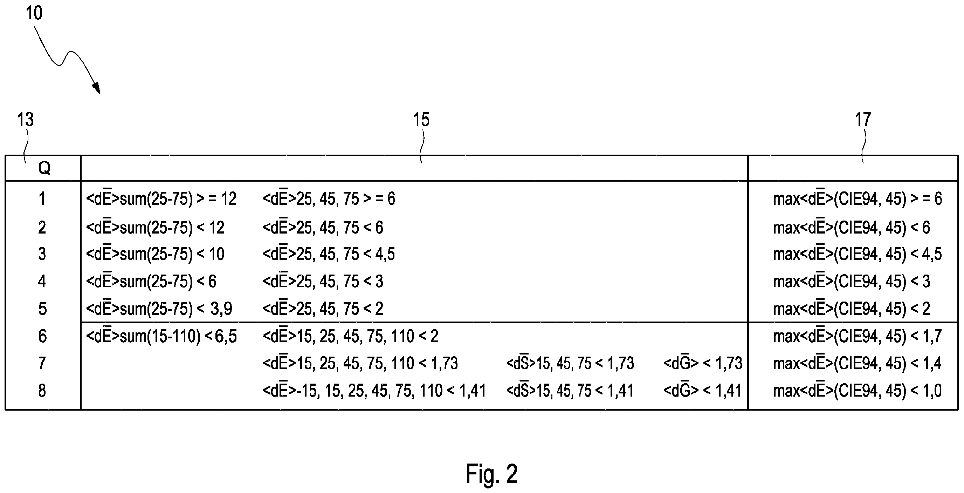

Die vorgegebene für alle Farbgüteindikatoren identische Abbildungsvorschrift definiert für jeden Skalenwert bzw. für eine jeweilige Zuordnung zu einem Skalenwert eine skalenwertspezifische Abbildung (siehe Tabelle aus Figur 2) bzw. skalenwertspezifische Bedingung, die von den zuvor berechneten Funktionswerten, d.h. jeweils von den jeweiligen farbgüteindikatorspezifischen Funktionswerten, zu erfüllen ist, um dem jeweiligen Farbgüteindikator für den betrachteten Lack, für den die Farbkontrolle durchzuführen ist, den entsprechenden jeweiligen Skalenwert zuzuordnen.

Weiterhin ist vorgesehen, dass, für den Fall, dass der Lack ein sogenannter Unilack ist, Farbdifferenzen lediglich einer Messgeometrie, die unter mindestens zwei verschiedenen Lichtarten bzw. Lichtquellen ermittelt wurden, miteinander durch die Funktion verrechnet werden. Eine Unterscheidung zwischen Uni- und Effektlacken kann bspw. gemäß DIN 6175-1 bestimmt werden. Anhand der verrechneten Farbdifferenzen kann ein jeweiliger Unilack einem jeweiligen Skalenwert des jeweiligen Farbgüteindikators gemäß der vorgegebenen Abbildungsvorschrift zugeordnet werden.

In möglicher Ausgestaltung umfasst die Mehrzahl der mit dem Lack lackierten Oberflächenelemente mindestens: ein lackiertes Oberflächenelement OEM eines Teils eines Produkts, insbesondere von bspw. einem Karosseriebauer lackiertes Oberflächenelement OEM einer Fahrzeugkarosserie, ein lackiertes Oberflächenelement ASP eines Anbauteils für das Produkt, insbesondere von bspw. einem Fahrzeugzulieferer mit dem Lack lackiertes Oberflächenelement ASP eines Karosserieanbauteils, das insbesondere aus Plastik gefertigt ist, und die Mehrzahl der mit dem Lack lackierten Kontrolloberflächenelemente umfasst mindestens: ein durch einen Hersteller des Lacks lackiertes Kontrolloberflächenelement OEM_QC für das Produkt, insbesondere die Fahrzeugkarosserie, ein durch den Hersteller des Lacks lackiertes Kontrolloberflächenelement ASP_QC für das Produktanbauteil, insbesondere das Karosserieanbauteil, das insbesondere aus Plastik gefertigt ist.

Ein von einem Karosseriebauer lackiertes Oberflächenelement OEM einer Fahrzeugkarosserie und ein von einem Fahrzeugzulieferer lackiertes Oberflächenelement ASP eines Karosserieanbauteils werden im Folgenden jeweils auch als Oberflächenelement aus einer Produktionslinie bezeichnet. Damit soll ausgedrückt werden, dass diese Oberflächenelemente im Laufe eines Produktionsprozesses eines jeweiligen Fahrzeugs an dazu vorgesehenen Arbeits- bzw. Lackierstationen lackiert werden. Dabei sind die Lackierstationen für die Oberflächenelemente einer Fahrzeugkarosserie und diejenigen für die Oberflächenelemente eines Karosserieanbauteils in der Regel unabhängig und separat voneinander.

OEM steht allgemein für "Original Equipment Manufacturer", wird hier aber insbesondere zur Bezeichnung eines von dem OEM mit dem Lack lackierten Oberflächenelements eines Produkts, insbesondere eines von bspw. dem Karosseriebauer lackierten Oberflächenelements einer Fahrzeugkarosserie verwendet, wobei hier, wie voranstehend erläutert, alle mit dem Lack lackierte Oberflächen von Produktteilen, insbesondere von Karosserieteilen einer Fahrzeugkarosserie, die vermessen werden, gemeint sind.

ASP steht generell für "Automotive Supplier Plastics", wird hier aber insbesondere zur Bezeichnung eines mit dem Lack lackierten Produktanbauteils, insbesondere eines mit dem Lack lackierten Karosserieanbauteils, das insbesondere aus Plastik und von bspw. einem Fahrzeugzulieferer hergestellt ist, verwendet, wobei hier ebenso alle mit dem Lack lackierten Oberflächen von Produktanbauteilen, insbesondere Karosserieanbauteilen eines bestimmten Typs bzw. einer bestimmten Herkunft bspw. eines bestimmten Fahrzeugzulieferers gemeint sind.

QC steht hier für "Quality Control".

Die jeweiligen farbmetrischen Koordinaten werden jeweils auf Basis jeweiliger Reflexionswerte der Farbreferenz und der Mehrzahl der lackierten Oberflächenelemente bzw. Kontrolloberflächenelemente bestimmt. Dabei wird für jedes der Mehrzahl der mit dem Lack lackierten Oberflächenelemente bzw. Kontrolloberflächenelemente ein jeweiliger Reflexionswert für eine jeweilige Messgeometrie und eine jeweilige Lichtquelle bestimmt:

$$R(\text{Ref})_\Phi \rightarrow (L^*,a^*,b^*)_{\Phi,l,\text{Ref}} \qquad\qquad (8)$$

$$R(\text{OEM})_{\Phi,i} \rightarrow (L^*,a^*,b^*)_{\Phi,l,i,\text{OEM}}$$

$$R(\text{ASP})_{\Phi,j} \rightarrow (L^*,a^*,b^*)_{\Phi,l,j,\text{ASP}}$$

$$R(\text{OEM\_QC})_\Phi \rightarrow (L^*,a^*,b^*)_{\Phi,l,\text{OEM\_QC}}$$

$$R(\text{ASP\_QC})_\Phi \rightarrow (L^*,a^*,b^*)_{\Phi,l,\text{ASP\_QC}}$$

wobei R den jeweiligen Reflexionswert angibt, $\Phi$ stellvertretend für eine jeweilige Messgeometrie steht, I stellvertretend für eine jeweilige Lichtquelle steht, Ref die Farbreferenz bezeichnet, OEM ein Produktteil, insbesondere ein von bspw. einem Karosseriebauer lackiertes Oberflächenelement einer Fahrzeugkarosserie, ASP ein Produktanbauteil, insbesondere ein von bspw. einem Fahrzeugzulieferer lackiertes Oberflächenelement eines Karosserieanbauteils, das insbesondere aus Plastik hergestellt ist, OEM_QC ein durch einen Hersteller des Lacks lackiertes Kontrolloberflächenelement für das Produkt, insbesondere die Fahrzeugkarosserie und ASP_QC ein durch den Hersteller des Lacks lackiertes Kontrolloberflächenelement für das Produktanbauteil, insbesondere das Karosserieanbauteil bezeichnet. i, j bezeichnen die jeweiligen Teile, welche die mit dem Lack lackierten Oberflächenelemente umfassen, wobei i das Produkt bzw. die Karosserie und j das Produktanbauteil bzw. Karosserieanbauteil, wie bspw. einen Stoßfänger bezeichnet. Beträgt bspw. die Anzahl Messgeometrien x, wobei x eine positive ganze Zahl ist, und die Anzahl Lichtquellen y, wobei y eine positive ganze Zahl ist, so ergeben sich pro Oberflächenelement bzw. Kontrolloberflächenelement, d. h. pro durch das Oberflächenelement bzw. Kontrolloberflächenelement repräsentierte lackierte Oberfläche x mal y, d.h. x*y Reflexionswerte und demnach daraus x mal y farbmetrische Koordinatentupel in einem jeweiligen Farbraum.

In möglicher Ausgestaltung des erfindungsgemäßen Verfahrens umfasst die Anzahl Messgeometrien mindestens: je eine Messanordnung mit einer 45°-Beleuchtung und einem Messwinkel ausgewählt aus: -15°, 15°, 25°, 45°, 75° und 110° und/oder je eine Messanordnung mit einem Messwinkel von 90° und einer Beleuchtung unter einem Beleuchtungswinkel ausgewählt aus: 15°-, 45°-, 75°- und einer diffusen Beleuchtung.

In einem zweiten Schritt werden sodann erfindungsgemäß für jede Messgeometrie der Anzahl Messgeometrien und jede Lichtquelle der Anzahl Lichtquellen jeweilige Farbdifferenzen bzw. Farbabstände aus den farbmetrischen Koordinaten der Farbreferenz und den jeweiligen farbmetrischen Koordinaten des Lacks für die Mehrzahl der mit dem Lack lackierten Oberflächenelemente bzw. Kontrolloberflächenelemente berechnet:

$$dE^*_i = f(dL^*, da^*, db^*, dC^*, dH^*)_{\Phi,l,i,OEM} \qquad (9)$$

$$dE^*_j = f(dL^*, da^*, db^*, dC^*, dH^*)_{\Phi,l,j,ASP}$$

$$dE^*_{OEM\_QC} = f(dL^*, da^*, db^*, dC^*, dH^*)_{\Phi,l,OEM\_QC}$$

$$dE^*_{ASP\_QC} = f(dL^*, da^*, db^*, dC^*, dH^*)_{\Phi,l,ASP\_QC}$$

Das bedeutet, dass sich pro Oberflächenelement bzw. pro durch das Oberflächenelement bzw. Kontrolloberflächenelement repräsentierte lackierte Oberfläche bei x*y Reflexionswerten entsprechend x*y Farbdifferenzen ergeben. Für jede Messgeometrie und Lichtquelle werden die Farbabstände bzw. -differenzen individuell, aber mit identischer Formel berechnet. Je nach Farbraum wird dabei Formel (3) oder Formel (4) verwendet.

Gemäß einer weiteren Ausführungsform des erfindungsgemäßen Verfahrens werden die jeweiligen Farbdifferenzen für zwei verschiedene Toleranzwerte normiert, wobei ein erster Toleranzwert für eine Serie von mit dem Lack einer Charge lackierten Oberflächenelementen bestimmt (= Serientoleranz) und ein zweiter Toleranzwert als Chargentoleranz für die Charge des Lacks fest vorgegeben wird (= Chargentoleranz).

Die Bestimmung der Serientoleranz, d. h. der Toleranzwert betreffend die Ausführung einer jeweiligen Lackierung mit dem Lack, erfolgt auf Basis der Chargentoleranz, die für die Charge bzw. eine Lieferung des Lacks fest vorgegeben ist. Dabei ergibt sich die Serientoleranz aus der Chargentoleranz multipliziert mit Werten von Faktoren g, wobei je nach gewähltem Farbraum, die die Chargentoleranz bzw. die winkelspezifische Toleranz $S_x$ aus Gleichung (5) mit $g_L$, $g_a$, $g_b$, gc bzw. $g_H$ zu multiplizieren ist. Dabei gilt: $g_L = 2,0$, $g_a = 1,2$, $g_b = 1,2$, $g_C = 1,8$ und $g_H = 1,2$. Hierbei wird auf die Norm DIN 6175-2, Stand März 2001, verwiesen und die dort hinterlegte Tabelle 2 im Kapitel "Farbtoleranzen für Automobillackierungen, Teil 2: Effektlackierungen".

Eine Serie von mit einem Lack einer Charge lackierten Oberflächen umfasst dabei all die Oberflächen eines jeweiligen Oberflächenelements, die innerhalb eines fortlaufenden Lackierprozesses mit dem Lack einer Charge lackiert werden.

In weiterer Ausgestaltung werden in einem weiteren Schritt diejenigen der mit dem Lack einer Charge lackierten Oberflächen eines jeweiligen Oberflächenelements aus der Serie ausgezählt, deren jeweilige Farbdifferenzen jeweils größer als der erste Toleranzwert, d. h. die Serientoleranz, sind. Auf Basis der ausgezählten Anzahl der Oberflächen wird ein Serien-Farbgüteindikator CPI (general color performance indicator) bestimmt, wobei die ausgezählte Anzahl der Oberflächen bzw. deren prozentualer Anteil an der Gesamtzahl der mit dem Lack der Charge lackierten Oberflächen aus der Serie gemäß einer vorgegebenen Zuordnungsvorschrift einem Wert der Skala zugeordnet wird, wobei der Skalenwert den Wert des Serien-Farbgüteindikators CPI angibt. Der Skalenwert liegt dabei in einem Intervall von 1 bis 8 bzw. Q1 bis Q8, wobei der Skalenwert 1 eine schlechteste Bewertung und der Skalenwert 8 eine beste Bewertung darstellt. Die nachfolgende tabellarische Aufstellung zeigt eine jeweilige Abbildung bzw. Zuordnung zu einem Skalenwert.

Dabei wird eine jeweilige für eine jeweilige Messgeometrie und Lichtquelle bestimmte Farbdifferenz <dE> auf den ersten Toleranzwert bzw. die Serientoleranz ("Serientol") normiert. Ist dabei bei nur einer Messgeometrie der bestimmte Farbabstand <dE>_Serientol > 1,7, so gilt die vermessene Oberfläche des jeweiligen Oberflächenelements insgesamt als nicht in Ordnung ("n.i.O."). Mit V wird der prozentuale Anteil der Oberflächen des jeweiligen Oberflächenelements, die nicht in Ordnung sind, an der Gesamtzahl der vermessenen Oberflächen des Oberflächenelements aus der Serie bezeichnet. Je nach Wert von V wird den vermessenen Oberflächen der Serie bzw. der jeweiligen Serie ein Skalenwert von Q1 bis Q8 zugeordnet.

Definitionen:

n.i.O. =    Einzelmessung mit <dE>_Serientol >1,7 bei einer Messgeometrie
V =    100 x Anzahl n.i.O./gesamte Anzahl von Messungen (keine Ausrei-βerbereinigung, alle Messungen betrachtet)

| Q1 | V | ≥ | 70 |
|---|---|---|---|

(fortgesetzt)

| Q2 | 60 | ≤ | V | < | 70 |
|---|---|---|---|---|---|
| Q3 | 50 | ≤ | V | < | 60 |
| Q4 | 40 | ≤ | V | < | 50 |
| Q5 | 30 | ≤ | V | < | 40 |
| Q6 | 20 | ≤ | V | < | 30 |
| Q7 | 10 | ≤ | V | < | 20 |
| Q8 | 10 | > | V | | |

Gemäß einer weiteren Ausführungform des erfindungsgemäßen Verfahrens wird auf für eine Serie von mit dem Lack einer Charge lackierten Oberflächen jeweiliger Oberflächenelemente bestimmte jeweilige Farbdifferenzen ein vorgegebenes statistisches Analyseverfahren durchgeführt. Dabei werden Ausreißer aussortiert und bereinigte jeweilige Farbdifferenzen bereitgestellt. Es handelt sich dabei bspw. um ein Verfahren zur multivarianten Ausreißerbereinigung.

Dadurch können die Messungen von Rauschen, das bspw. während einer Mischphase von zwei Batches bzw. Chargen des Lacks oder aufgrund weiterer nicht weiter erklärbarer Umstände entsteht, befreit werden. Wenn jede Messung bzw. jede Oberfläche, bei der zumindest eine Messgeometrie als Ausreißer identifiziert wurde, eliminiert wird, erhält man einen neuen Satz von bereinigten Farbdifferenzen:

$$dE^*_{iP} = (dL^*, da^*, db^*, dC^*, dH^*)_{\Phi,l,i,OEM,(purged)} \qquad (10)$$

$$dE^*_{jP} = (dL^*, da^*, db^*, dC^*, dH^*)_{\Phi,l,j,ASP,(purged)}$$

wobei "P" für bereinigt bzw. "purged" steht.

Ein Oberflächenelement, wie bspw. ein Oberflächenelement OEM, bezeichnet dabei, wie voranstehend bereits erläutert, keine einzelne Oberfläche, bspw. einer Fahrzeugkarosserie, sondern eine Gruppe von gleichartigen mit dem Lack einer Charge lackierten Oberflächen.

In einem weiteren Schritt werden die bestimmten, bereinigten und mit der Chargentoleranz normierten Farbdifferenzen genutzt, um die Güte des Lacks bzw. der Lackcharge in eindimensionalen Gütestufen anhand der Skala zu bestimmen. Dabei wird zwischen verschiedenen Farbgüteindikatoren unterschieden, die jeweils auf Grundlage unterschiedlicher mathematischer Verknüpfungen bzw. mathematischer Zusammenhänge bestimmt werden.

Zur Bestimmung eines Farbgüteindikators BPI (batch performance indicator) für den Lack bzw. die jeweilige Lackcharge wird für jede Messgeometrie der Anzahl Messgeometrien und jede Lichtquelle der Anzahl Lichtquellen mindestens ein erster Funktionswert auf Basis eines Mittelwerts bzw. als Mittelwert von für mindestens ein von bspw. einem Karosseriebauer lackiertes Oberflächenelement OEM einer Fahrzeugkarosserie bestimmten, bereinigten und normierten Farbdifferenzen und/oder eines Mittelwerts bzw. als Mittelwert von für mindestens ein von bspw. einem Fahrzeugzulieferer lackiertes Oberflächenelement ASP eines Karosserieanbauteils, insbesondere aus Plastik, bestimmten, bereinigten und normierten Farbdifferenzen bestimmt. Gemäß der aus WO 2016/074801 A2 bekannten und in Figur 2 gezeigten Tabelle werden die pro Oberflächenelement berechneten jeweiligen ersten Funktionswerte der Anzahl Messgeometrien und der Anzahl Lichtquellen wiederum gemäß der vorgegebenen Abbildungsvorschrift "rating" miteinander verrechnet und ein sich dabei ergebendes Resultat mittels der im Voraus bereitzustellenden Abbildungsvorschrift "rating", wie sie sich bspw. aus der Tabelle aus Figur 2 ergibt, einem Wert der für alle Farbgüteindikatoren identischen Skala zugeordnet. Der Farbgüteindikator BPI ergibt sich dabei wie folgt:

$$BPI_{OEM, ASP} = rating[f(averaged <dX>_{SC(OEM,ASP,purged)})], \qquad (11)$$

wobei $<dX> = dX^*/S_x$ gilt und averaged $<dX>_{SC(OEM,ASP,purged)}$ dem Mittelwert der mit dem Normierungsfaktor SC (= Chargentoleranz) normierten und bereinigten Farbdifferenzen eines von bspw. einem Karosseriebauer lackierten Oberflächenelements OEM einer Fahrzeugkarosserie bzw. eines von bspw. einem Fahrzeugzulieferer lackierten Oberflächenelements ASP eines Karosserieanbauteils aus Plastik entspricht. Der Normierungsfaktor SC entspricht dabei einer jeweiligen Chargentoleranz der jeweils untersuchten Charge des Lacks. Es ergibt sich somit pro Charge ein Farbgüteindikator BPI für das mit dem Lack der jeweiligen Charge lackierte Oberflächenelement OEM und ein Farbgüteindikator BPI für das mit dem Lack der jeweiligen Charge lackierte Oberflächenelement ASP. Dabei werden für das mit dem Lack der Charge lackierte Oberflächenelement OEM in der Regel mehrere gleichartige durch das Oberflächenelement repräsentierte Oberflächen vermessen. Gleiches gilt für das mit dem Lack der jeweiligen Charge lackierte Oberflächenelement ASP, für das ebenfalls in der Regel mehrere gleichartige durch das Oberflächenelement ASP repräsentierte Oberflächen vermessen werden. Gemäß der vorgegebenen Abbildungsvorschrift (siehe Tabelle aus Figur 2) ist es zur Zuordnung zu höheren Skalenwerten, d. h. zu Skalenwert 7 oder 8, bei Effektlacken auch notwendig, nicht nur für jede Messgeometrie und jede Lichtquelle die bestimmten, bereinigten und normierten Farbdifferenzen in den farbgüteindikatorspezifischen mathematischen Zusammenhang als Variablen einsetzen, sondern auch die bestimmten, bereinigten und normierten Glitzerabstände und/oder Grobheitsabweichungen. Das bedeutet, dass <dX> hier stellvertretend für <dE> und im Falle von Effektlacken zusätzlich für <dS> und <dG> steht.

Der Farbgüteindikator BPI repräsentiert eine farbbezogene Beschichtungsqualität des Lacks bzw. der jeweiligen Lackcharge.

In weiterer Ausgestaltung des erfindungsgemäßen Verfahrens wird zur Bestimmung eines Farbgüteindikators API (alignment performance indicator) für jede Messgeometrie und jede Lichtquelle jeweils ein zweiter Funktionswert auf Basis eines Absolutwertes bzw. Betrags bzw. als Absolutwert einer jeweiligen Differenz zwischen einer normierten Farbdifferenz eines durch einen Hersteller des Lacks lackierten Kontrolloberflächenelements OEM_QC für die Fahrzeugkarosserie bzw. eines durch den Hersteller des Lacks lackierten Kontrolloberflächenelement ASP_QC für das Karosserieanbauteil, insbesondere aus Plastik, und einem Mittelwert von bereinigten und normierten Farbdifferenzen von mindestens einem von bspw. einem Karosseriebauer lackierten Oberflächenelement OEM der Fahrzeugkarosserie bzw. einem Mittelwert von bereinigten und normierten Farbdifferenzen von mindestens einem von bspw. einem Fahrzeugzulieferer lackierten Oberflächenelement ASP des Karosserieanbauteils, das insbesondere aus Plastik hergestellt ist, bestimmt. Die jeweiligen zweiten Funktionswerte der Anzahl Messgeometrien und der Anzahl Lichtquellen, die sich für das Oberflächenelelement OEM bzw. für das Oberflächenelement ASP ergeben, werden wiederum, wie bspw. in der Tabelle aus Figur 2 gezeigt, miteinander verrechnet, wobei die sich dabei ergebenden Werte mittels der im Voraus bereitzustellenden Abbildungsvorschrift jeweils einem Wert der für alle Farbgüteindikatoren identischen Skala zugeordnet werden. Der Farbgüteindikator API ergibt sich dabei wie folgt:

$$API_{OEM, ASP} = rating[f(ABS(<dX>_{SC(OEM\_QC, ASP\_QC)} - averaged <dX>_{SC(OEM,ASP,purged)}))]$$

$$(12)$$

wobei $<dX> = dX^*/S_x$ gilt, $<dX>_{SC(OEM\_QC, ASP\_QC)}$ einer normierten Farbdifferenz eines durch einen Hersteller des Lacks lackierten Kontrolloberflächenelements OEM_QC für die Fahrzeugkarosserie bzw. eines durch den Hersteller des Lacks lackierten Kontrolloberflächenelements ASP_QC für das Karosserieanbauteil, das insbesondere aus Plastik hergestellt ist und averaged $<dX>_{SC(OEM,ASP,purged)}$ dem Mittelwert der mit dem Normierungsfaktor SC normierten und bereinigten Farbdifferenzen eines von bspw. einem Karosseriebauer lackierten Oberflächenelements OEM einer Fahrzeugkarosserie bzw. eines von bspw. einem Fahrzeugzulieferer lackierten Oberflächenelements ASP eines Karosserieanbauteils, das insbesondere aus Plastik hergestellt ist, entspricht und ABS für Absolutwert steht. Der Farbgüteindikator API wird dabei einerseits für OEM und andererseits für ASP bestimmt, d.h. es resultieren zwei unabhängig voneinander bestimmte Farbgüteindikatoren $API_{OEM}$ und $API_{ASP}$, wobei gilt:

$$API_{OEM} = rating[f(ABS(<dX>_{SC(OEM\_QC)} - averaged <dX>_{SC(OEM, purged)}))]$$

$$API_{ASP} = rating[f(ABS(<dX>_{SC(ASP\_QC)} - averaged <dX>_{SC(ASP, purged)}))]$$

Im Falle von Effektlacken werden die Glitzerabstände und Grobheitsabweichungen analog zu den Ausführungen zu dem Farbgüteindikator BPI berücksichtigt. Das bedeutet, dass auch hier <dX> stellvertretend für <dE> und ggf. für <dS> und <dG> steht.

Der jeweilige Farbgüteindikator API repräsentiert eine Spritzkabinenangleichung zwischen dem Hersteller des Lacks und der Kundenlinie, d. h. der Linie des Karosseriebauers bzw. des Fahrzeugzulieferers.

In noch weiterer Ausgestaltung wird zur Bestimmung eines Farbgüteindikators CHI (color harmony index) für jede Messgeometrie und jede Lichtquelle jeweils ein dritter Funktionswert auf Basis eines Absolutwerts bzw. als Absolutwert einer Differenz zwischen einem Mittelwert von jeweiligen normierten Farbdifferenzen von einem von bspw. einem Karosseriebauer lackierten Oberflächenelement OEM einer Fahrzeugkarosserie und einem Mittelwert von jeweiligen normierten Farbdifferenzen von einem von bspw. einem Fahrzeugzulieferer lackierten Oberflächenelement ASP eines Karosserieanbauteils, das insbesondere aus Plastik hergestellt ist, bestimmt. Die dritten Funktionswerte werden mittels der im Voraus bereitzustellenden Abbildungsvorschrift einem Wert der für alle Farbgüteindikatoren identischen Skala zugeordnet. CHI wird dabei berechnet als:

$$CHI_{OEM, ASP} = rating[f(ABS (averaged <dX>_{SC,OEM} - averaged <dX>_{SC,ASP}))] \quad (13)$$

wobei $<dX> = dX^*/S_x$ gilt, $<dX>_{SC,OEM}$ einer mit dem Normierungsfaktor SC normierten Farbdifferenz eines mit dem Lack lackierten Oberflächenelements OEM für die Fahrzeugkarosserie und $<dX>_{SC,ASP}$ einer mit dem Normierungsfaktor SC normierten Farbdifferenz eines mit dem Lack lackierten Oberflächenelements ASP für das Karosserieanbauteil, insbesondere aus Plastik, entspricht. Bei bspw. 6 Messgeometrien und einer Lichtquelle ergeben sich 6 dritte Funktionswerte. Im Falle von Effektlacken kommen zur Berücksichtigung von Glitzerabständen und Grobheitsabweichungen noch 6 + 6 dritte Funktionswerte dazu.

Dabei werden die farbmetrischen Konstanten jeweils mit einer für die Charge des Lacks fest vorgegebenen Chargentoleranz SC gewichtet bzw. normiert. Der Farbgüteindikator CHI repräsentiert eine mittlere Abweichung zwischen lackierten Oberflächenelementen unterschiedlicher Lackierstationen, d. h. insbesondere zwischen einem mit dem Lack von einem Karosseriebauer lackierten Oberflächenelement einer Karosserie und einem mit dem Lack von einem Fahrzeugzulieferer lackierten Oberflächenelement eines Karosserieanbauteils aus Plastik.

Gemäß einer weiteren Ausführungsform des erfindungsgemäßen Verfahrens wird ein Farbgüteindikator LPI (line performance indicator) bestimmt, wobei für jede Messgeometrie und jede Lichtquelle jeweils ein vierter Funktionswert auf Basis einer Varianz bzw. als Varianz von bereinigten und normierten Farbdifferenzen von mindestens einem von bspw. einem Karosseriebauer lackierten Oberflächenelement OEM einer Fahrzeugkarosserie und/oder von bereinigten und normierten Farbdifferenzen von mindestens einem von bspw. einem Fahrzeugzulieferer lackierten Oberflächenelement ASP eines Karosserieanbauteils, das insbesondere aus Plastik hergestellt ist, bestimmt wird und die jeweiligen vierten Funktionswerte der Anzahl Messgeometrien und der Anzahl Lichtquellen wiederum für jedes Oberflächenelement gesondert miteinander verrechnet werden und das sich dabei ergebende jeweilige Resultat für jedes Oberflächenelement gesondert mittels der im Voraus bereitzustellenden Abbildungsvorschrift einem Wert der für alle Farbgüteindikatoren identischen Skala zugeordnet wird. Der Farbgüteindikator LPI ergibt sich dabei wie folgt:

$$LPI_{OEM,ASP} = rating[f(6<dX>_{WLPI(OEM,ASP,purged)})] \quad (14)$$

wobei $6<dX>$ die Varianz angibt, WLPI stellt den Normierungsfaktor dar, mit dem die jeweiligen Farbdifferenzen bzw. die jeweiligen farbmetrischen Konstanten zu normieren sind. Dabei werden die farbmetrischen Konstanten L*, a*, b*, C*, H* wie folgt jeweils gewichtet: L* mit 1.0, a* mit 0.2, b* mit 0.2, C* mit 0.8, H* mit 0.2. Diese jeweiligen Wichtungskonstanten sind für die Messgeometrien bzw. die spektralen Geometrien vorgegeben.

Der Farbgüteindikator LPI repräsentiert eine Prozessvarianz beim Lackieren eines Oberflächenelements einer Linie, d.h. bspw. eines Karosserieanbauteils oder einer Fahrzeugkarosserie. Für die verschiedenen Oberflächenelemente werden unabhängig und separat voneinander unterschiedliche Farbgüteindikatoren LPI berechnet, d.h. es resultiert ein Farbgüteindikator $LPI_{OEM}$ für das Oberflächenelement der Fahrzeugkarosserie und ein Farbgüteindikator $LPI_{ASP}$ für das Oberflächenelement des Karosseriebauteils.

Das von bspw. einem Karosseriebauer mit dem Lack lackierte Oberflächenelement OEM einer Fahrzeugkarosserie und das von bspw. einem Fahrzeugzulieferer mit dem Lack lackierte Oberflächenelement ASP eines Karosserieanbauteils stehen stellvertretend für mit dem Lack lackierte Oberflächenelemente, die an unterschiedlichen und in der Regel voneinander unabhängigen Lackierstationen mit dem Lack lackiert wurden und/oder die einen unterschiedlichen Untergrund bzw. ein unterschiedliches Untergrundmaterial aufweisen, auf den bzw. das der Lack beim Lackieren aufgebracht wurde. Da ein mit dem Lack lackiertes Oberflächenelement OEM einer Fahrzeugkarosserie in der Regel sowohl an einer anderen Lackierstation als ein mit dem Lack lackiertes Oberflächenelement ASP eines Karosserieanbauteils lackiert wurde als auch einen anderen Untergrund aufweist, werden diese beiden Typen von Oberflächenelementen im Rahmen der vorliegenden Offenbarung stellvertretend für alle untereinander die voranstehend genannten Unterschiede aufweisenden Oberflächenelemente, die mit dem Lack lackiert sind, genannt, insbesondere stellvertretend für ein mit dem Lack lackiertes Oberflächenelement OEM allgemein eines Produkts und für ein mit dem Lack lackiertes Oberflächenelement ASP eines Produktanbauteils. Gleiches gilt entsprechend für die Kontrolloberflächenelemente OEM_QC und ASP_QC.

Ferner betrifft die vorliegende Erfindung ein Computerprogramm mit Programmcodemitteln, die dazu ausgelegt sind, alle Schritte eines voranstehend beschriebenen Verfahrens durchzuführen bzw. anzusteuern, wenn das Computerprogramm auf einem Computer oder einer entsprechenden Rechnereinheit ausgeführt wird.

Darüber hinaus wird ein System zum Bestimmen einer Mehrzahl von unterschiedlichen Farbgüteindikatoren für eine Farbkontrolle eines Lacks bereitgestellt, wobei das System mindestens umfasst: ein Spektralphotometer, das dazu ausgelegt ist, für eine Anzahl Messgeometrien und eine Anzahl Lichtquellen farbmetrische Koordinaten einer Farbreferenz und farbmetrische Koordinaten des Lacks für eine Mehrzahl von mit dem Lack lackierten unterschiedlichen Oberflächenelementen und für eine Mehrzahl von mit dem Lack durch einen Hersteller des Lacks lackierten Kontrolloberflächenelementen zu ermitteln, und eine Rechnereinheit, die dazu konfiguriert ist, für jede Messgeometrie der Anzahl Messgeometrien und jede Lichtquelle der Anzahl Lichtquellen jeweilige Farbdifferenzen bzw. Farbabstände aus den farbmetrischen Koordinaten der Farbreferenz und den jeweiligen farbmetrischen Koordinaten des Lacks für die Mehrzahl der mit dem Lack lackierten Oberflächenelemente und der mit dem Lack lackierten Kontrolloberflächenelemente zu berechnen, die jeweiligen farbmetrischen Koordinaten mit je einem Gewichtungsfaktor zu normieren, und jeden der Mehrzahl der Farbgüteindikatoren mittels einer durch eine vorgegebene Abbildungsvorschrift definierten Abbildung von Funktionswerten eines für den jeweiligen Farbgüteindikator spezifischen mathematischen Zusammenhangs zwischen den Farbdifferenzen von mindestens einem der Oberflächenelemente zu der Farbreferenz auf einen Wert einer für alle Farbgüteindikatoren identischen Skala zu bestimmen, wobei der mathematische Zusammenhang für mindestens einen der Mehrzahl von Farbgüteindikatoren einem mathematischen Zusammenhang zwischen Farbdifferenzen zu der Farbreferenz von mindestens einem der Oberflächenelemente und einem der Kontrolloberflächenelemente entspricht. Dabei kann sich die Skala bspw. über ein Intervall von ganzzahligen, positiven Zahlwerten von 1 bis 8 erstrecken.

Um jeweilige Effekteigenschaften eines Effektlacks bei dem erfindungsgemäßen Verfahren zu berücksichtigen, ist vorgesehen, dass Glitzerabstände, d. h. Sparkle-Differenzen, und Grobheitsabweichungen, d. h. Graininess-Differenzen, gemessen mit einem Gonio-Effektspektralphotometer, berücksichtigt werden. Dazu werden jeweilige mit dem Gonio-Effektspektralphotometer gemessene Werte der Glitzerabstände bzw. der Grobheitsabweichungen normiert und bei einer Bestimmung eines jeweiligen Farbgüteindikators berücksichtigt. Eine Berücksichtigung findet dabei insbesondere bei einer Zuordnung zu den Skalenwerten Q7 und Q8 statt. Würden die für die Anzahl Messgeometrien und die Anzahl Lichtquellen jeweils mittels des für einen jeweiligen Farbgüteindikator spezifischen mathematischen Zusammenhangs verrechneten Farbdifferenzen von dem mindestens einen Obeflächenelement auf den Skalenwert 7 bzw. Q7 der vorgegebenen Skala abgebildet werden, so werden neben diesen auf Basis der Farbdifferenzen berechneten Funktionswerten weitere Funktionswerte auf Basis der für die Anzahl Messgeometrien und die Anzahl Lichtquellen bestimmten Glitzerabstände <dS> zwischen dem mindestens einen mit dem Lack lackierten Oberflächenelement bzw. Kontrolloberfllächenelement und der Farbreferenz berechnet und überprüft, ob diese so berechneten Funktionswerte für keine der Messgeometrien 15°, 45° und 75° größer oder gleich einem Wert von 1,73 ist. Weiterhin werden für die Anzahl Messgeometrien und die Anzahl Lichtquellen die Grobheitsabweichungen <dG> bestimmt und mittels des farbgüteindikatorspezifischen Zusammenhangs berechnet und überprüft, ob diese nicht größer oder gleich einem Wert von 1,73 sind.

Würden die für die Anzahl Messgeometrien und die Anzahl Lichtquellen jeweils mittels des für einen jeweiligen Farbgüteindikator spezifischen mathematischen Zusammenhangs berechneten Funktionswerte auf Basis der Farbdifferenzen von dem mindestens einen Oberflächenelement auf den Skalenwert 8 bzw. Q8 der vorgegebenen Skala abgebildet werden, so werden neben diesen Funktionswerten Funktionswerte auf Basis der Glitzerabstände berechnet und geprüft, ob diese für keine der Messgeometrien 15°, 45° und 75° größer oder gleich einem Wert von 1,41 ist. Weiterhin werden Funktionswerte auf Basis der Grobheitsabweichungen berechnet und geprüft, ob diese nicht größer oder gleich einem Wert von 1,41 sind.

Eine mögliche Ausgestaltung des erfindungsgemäßen Computerprogramms umfasst bspw. folgende Schritte:

1. Ermitteln aller Farbkoordinaten für alle verfügbaren Messgeometrien und/oder alle Lichtquellen bzw. Lichtarten eines ersten mit dem Lack lackierten Oberflächenelements und einer Farbreferenz in einem Farbraum.

2. Berechnen jeweiliger Farbdifferenzen zwischen dem mit dem Lack lackierten Oberflächenelement und der Farbreferenz für alle Messgeometrien und/oder alle Lichtquellen.

3. Falls der zu vergleichende Lack ein Effektlack ist, Berechnen jeweiliger Glitzerabstände und/oder Grobheitsabweichungen für jede Messgeometrie.

4. Falls der zu vergleichende Lack ein Unilack ist, Berechnen jeweiliger Farbdifferenzen für mindestens zwei Lichtarten.

5. Normieren der in Schritt 2 bzw. 4 berechneten Farbdifferenzen sowie der ggf. in Schritt 3 berechneten Glitzerabstände und/oder Grobheitsabweichungen.

6. Wiederholen der Schritte 1 bis 5 für mindestens ein zweites mit dem Lack lackiertes Oberflächenelement, das einen gegenüber dem ersten Oberflächenelement unterschiedlichen Untergrund, auf den der Lack aufgetragen ist, zeigt und/oder das gegenüber dem ersten Oberflächenelement an einer anderen Lackierstation und/oder unter anderen Lackierbedingungen lackiert wurde.

7. Normieren der berechneten Farbdifferenzen mit einem ersten Toleranzwert, insbesondere einer Serientoleranz, und Berechnen des Serien-Farbgüteindikators CPI.

8. Bereinigen der berechneten Farbdifferenzen gemäß Formel (10).

9. Jeweiliges Wiederholen der Schritte 1 bis 5 für jeweilige mit dem Lack lackierte Kontrolloberflächenelemente für das erste bzw. das mindestens eine zweite Oberflächenelement.

10. Berechnen der jeweiligen Farbgüteindikatoren BPI, API, CHI, LPI mittels der berechneten Farbdifferenzen und der ggf. berechneten Glitzerabstände und Grobheitsabweichungen und der Formeln (11) bis (14).

Erfindungsgemäß wird demnach jeweils eine konkrete Zahl zur Bestimmung eines jeweiligen Farbgüteindikators eines Lacks durch exakt definierte Regeln bereitgestellt. Die Qualitätsstufen werden durch eindeutige Gleichungen definiert. Nur wenn alle Gleichungen einer Qualitätsstufe, entsprechend jeweils einem konkreten Skalenwert, erfüllt sind, wird dem jeweiligen Lack bzw. der jeweiligen Lackcharge dieser konkrete Skalenwert für den jeweiligen Farbgüteindikator zugeordnet. Werden nicht alle Kriterien einer Qualitätsstufe erfüllt, erfolgt eine Zuordnung zu der nächsttieferen Qualitätsstufe. Sind auch hier nicht alle Qualitätskriterien erfüllt, erfolgt eine Zuordnung zu der wiederum nächsttieferen Qualitätsstufe, usw. Sind in der zweitniedrigsten Qualitätsstufe nicht alle Qualitätskriterien erfüllt, erfolgt eine Zuordnung zu der niedrigsten Qualitätsstufe. Eine Zuordnung zu der niedrigsten Qualitätsstufe erfolgt immer dann, wenn für keine höhere Qualitätsstufe die jeweiligen Qualitätskriterien erfüllt sind.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurzbeschreibung der Zeichnung

Figur 1 zeigt in schematischer Darstellung ein Ablaufdiagramm einer möglichen Ausführungsform des erfindungsgemäßen Verfahrens.

Figur 2 zeigt eine Ausführungsform einer erfindungsgemäß vorgesehenen Abbildungsvorschrift zur Zuordnung zu jeweiligen Skalenwerten einer Ausführungsform der erfindungsgemäß vorgesehenen Skala.

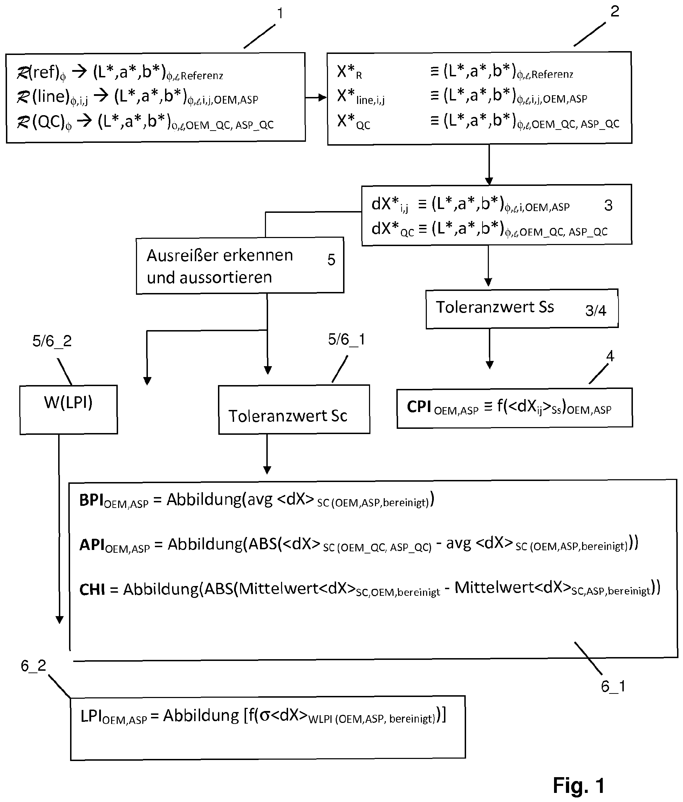

Figur 1 zeigt in schematischer Darstellung ein Ablaufdiagramm bzw. ein Flussdiagramm einer Ausführungsform des erfindungsgemäßen Verfahrens. In einem Schritt 1 werden dabei zunächst jeweilige Reflexionswerte einer Mehrzahl von mit dem Lack lackierten Oberflächenelementen bzw. Kontrolloberflächenelementen je mit einem Spektralphotometer für eine Anzahl Messgeometrien und eine Anzahl Lichtquellen ermittelt. Zusätzlich wird auch ein Reflexionswert einer Farbreferenz für die Anzahl Messgeometrien und die Anzahl Lichtquellen bestimmt. Die Messung und Aufzeichnung der verschiedenen Reflexionswerte ist in Schritt 1 dargestellt durch:

für die Farbreferenz: $R(\text{Ref})_\phi$ -> $(L^*,a^*,b^*)_{\phi,l,\text{reference}}$,

für die jeweiligen Oberflächenelemente, die während der Produktion ("line") bspw. eines Fahrzeugs von bspw. einem Karosseriebauer und/oder einem Fahrzeugzulieferer mit dem Lack lackiert wurden:

$$R(\text{line})_{\Phi,i,j} \rightarrow (L^*,a^*,b^*)_{\Phi,l,i,j,\text{OEM,ASP}},$$

für jeweilige durch einen Hersteller eines Lacks lackierte Kontrolloberflächenelemente der Fahrzeugkarosserie bzw. des Karosserieanbauteils aus Plastik:

$$R(QC)_\Phi \to (L^*, a^*, b^*)_{\Phi, i, OEM\_QC, ASP\_QC}.$$

Dabei bezeichnen i bzw. j die konkreten jeweiligen Bauteile, deren Oberfläche mit dem Lack lackiert wird. Dabei kann es sich bspw. um eine Stoßstange, im Fall eines Karosserieanbauteils, oder eine Kühlerhaube, im Fall eines Karosseriebauteils, handeln. Ferner wird das Karosseriebauteil mit OEM und das jeweilige Anbauteil, insbesondere aus Plastik, mit ASP bezeichnet. Im Folgenden werden die Karosseriebauteile bzw. Anbauteile, von denen jeweils Oberflächenelemente mit dem Lack lackiert sind, als Oberflächenelemente aus der Produktionslinie bezeichnet.

Ausgehend von den ermittelten Reflexionswerten werden in einem Schritt 2 sowohl für die Farbreferenz als auch für die Oberflächenelemente der Produktionslinie und auch für die Kontrolloberflächenelemente OEM_QC, ASP_QC die jeweiligen farbmetrischen Koordinaten bestimmt.

Ausgehend von den ermittelten farbmetrischen Koordinaten werden in einem Schritt 3 die Farbdifferenzen der jeweiligen Oberflächenelemente der Produktionslinie und der jeweiligen Kontrolloberflächenelemente zu der Farbreferenz ermittelt. Dabei wird für jede Messgeometrie der Anzahl Messgeometrien und jede Lichtquelle der Anzahl Lichtquellen separat die jeweilige Farbdifferenz ermittelt, so dass man letztendlich für jedes Oberflächenelement der Produktionslinie und jedes Kontrolloberflächenelement einen Satz an berechneten Farbdifferenzen hat, nämlich pro durch das jeweilige Oberflächenelement repräsentierte Oberfläche pro Messgeometrie und pro Lichtquelle je eine Farbdifferenz. Dabei ist zu beachten, dass in der Regel pro Oberflächenelement mehrere gleichartige Oberflächen vermessen werden. Ferner werden, im Falle eines Effektlacks, pro Oberfläche pro Messgeometrie pro Lichtquelle je ein Glitzerabstand und eine Grobheitsabweichung bestimmt. In einem nachfolgenden Schritt 3/4 werden die ermittelten Farbdifferenzen und ggf. die ermittelten Glitzerabstände und Grobheitsabweichungen je mit einem Toleranzwert Ss normiert, wobei der Toleranzwert Ss für eine Serie von Oberflächen eines Oberflächenelements in der Produktion, d. h. von mit dem Lack einer Charge lackierten Oberflächen eines Oberflächenelements aus einer Serie, bestimmt wird. Das heißt, der erste Toleranzwert Ss wird für eine Serie von mit dem Lack einer Charge lackierten Oberflächen eines Oberflächenelements bestimmt und als Normierungsfaktor für die für die jeweiligen mit dem Lack einer Charge lackierten Oberflächen des Oberflächenelements aus der Serie bestimmten Farbdifferenzen und ggf. Glitzerabständen und Grobheitsabweichungen verwendet. Dabei werden diejenigen der mit dem Lack einer Charge lackierten Oberflächen des Oberflächenelements aus der Serie ausgezählt, deren jeweilige Farbdifferenzen und/oder Glitzerabstände und/oder Grobheitsabweichungen jeweils größer als der erste Toleranzwert Ss sind. Auf Basis der Anzahl der dabei ausgezählten Oberflächen wird in einem Schritt 4 ein Farbgüteindikator CPI bestimmt. Das heißt, der Farbgüteindikator CPI ist funktional, wie hier verallgemeinert durch "f" kenntlich gemacht, assoziiert mit der Anzahl bzw. dem prozentualen Anteil der ausgezählten Oberflächen eines Oberflächenelements aus der mit dem Lack einer Charge lackierten Oberflächen des Oberflächenelements aus einer Serie, die nicht innerhalb des durch den Toleranzwert Ss gegebenen Toleranzbereichs liegen.

In einem Schritt 5 wird ein vorgegebenes statistisches Analyseverfahren für die für die Oberflächenelemente der Produktionslinie und für die Kontrolloberflächenelemente berechneten Farbdifferenzen und ggf. Glitzerabstände und ggf. Grobheitsabweichungen durchgeführt, so dass Ausreißer erkannt und aussortiert werden können und danach bereinigte jeweilige Farbdifferenzen und ggf. Glitzerabstände und ggf. Grobheitsabweichungen für die jeweiligen Oberflächenelemente bereitgestellt werden können. Das bedeutet, dass das vorgegebene definierte statistische Analyseverfahren als Prüfung auf Ausreißer agiert und ermöglicht, die Messungen von Rauschen zu befreien, was bspw. während einer Mischphase von zwei Lack-Batches auftreten kann. Andere Ausreißer sind oft nicht erklärbar, sollten aber aus einer zuverlässigen Farbkontrolle aussortiert werden. Die nunmehr bereinigten jeweiligen Farbdifferenzen und ggf. Glitzerabstände und ggf. Grobheitsabweichungen werden in einem Schritt 5/6_1 ebenfalls normiert und zwar mit einem zweiten Normierungsfaktor Sc, der für einen Lack einer Charge als Chargentoleranz fest vorgegeben ist. Die nunmehr normierten und bereinigten Farbdifferenzen und ggf. die normierten und bereinigten Glitzerabstände und Grobheitsabweichungen dienen nunmehr dazu, verschiedene Farbgüteindikatoren zu ermitteln, wobei jeder Farbgüteindikator auf einer farbgüteindikatorspezifischen mathematischen Verknüpfung, hier übergreifend mit "f" bezeichnet, der jeweiligen Farbdifferenzen bzw. Glitzerabstände bzw. Grobheitsabweichungen der verschiedenen Oberflächenelemente basiert.

In einem Schritt 6_1 wird nunmehr auf Grundlage der Farbdifferenzen und ggf. Glitzerabstände und ggf. Grobheitsabweichungen der jeweiligen Oberflächenelemente der Produktionslinie ein Farbindikator BPI berechnet. Dabei wird für jede Messgeometrie und jede Lichtquelle je ein Mittelwert über alle Farbdifferenzen bzw. Farbabstände und ggf. Glitzerabstände und ggf. Grobheitsabweichungen eines jeweiligen Oberflächenelements aus der Produktionslinie ermittelt. Die jeweils ermittelten Mittelwerte für die Anzahl Messgeometrien und die Anzahl Lichtquellen werden wiederum in vorgegebener Weise, wie bspw. in der Tabelle aus Figur 2 angegeben, miteinander verrechnet, und das sich dabei ergebende Resultat wird mittels der im Voraus bereitzustellenden Abbildungsvorschrift "rating" einem Wert der für alle Farbgüteindikatoren identischen Skala zugeordnet, wobei der zugeordnete Skalenwert den Wert des Farbgüteindikators BPI angibt. Dabei wird für je ein Oberflächenelement ein jeweiliger Farbgüteindikator BPI bestimmt, d.h. es gibt hier einen $BPI_{OEM}$ und einen davon unabhängig bestimmten $BPI_{ASP}$.

Ferner wird ein Farbgüteindikator API berechnet, wobei dabei für jede Messgeometrie und jede Lichtquelle ein zweiter Funktionswert als Absolutwert einer jeweiligen Differenz zwischen einer normierten Farbdifferenz bzw. eines normierten Glitzerabstands bzw. einer normierten Grobheitsabweichung eines durch einen Hersteller des Lacks lackierten Kontrolloberflächenelements OEM_QC einer Fahrzeugkarosserie bzw. eines durch den Hersteller des Lacks lackierten Kontrolloberflächenelements ASP_QC des Karosserieanbauteils aus Plastik und einem Mittelwert von bereinigten und normierten Farbdifferenzen und ggf. Glitzerabständen und ggf. Grobheitsabweichungen von mindestens einem von einem Karosseriebauer lackierten Oberflächenelement OEM einer Fahrzeugkarosserie bzw. einem Mittelwert von bereinigten und normierten Farbdifferenzen und ggf. Glitzerabständen und ggf. Grobheitsabweichungen von mindestens einem von einem Fahrzeugzulieferer lackierten Oberflächenelement ASP eines Karosserieanbauteils aus Plastik bestimmt werden. Das bedeutet, dass sich bei x Messgeometrien und y Lichtquellen x*y zweite Funktionswerte in Bezug auf die miteinander verrechneten Farbdifferenzen und ggf. entsprechend viele zweite Funktionswerte in Bezug auf die miteinander verrechneten Glitzerabstände bzw. Grobheitsabweichungen pro Oberflächenelement ergeben. Den bspw. gemäß Tabelle aus Figur 2 miteinander verrechneten zweiten Funktionswerten eines Oberflächenelements werden mittels der im Voraus bereitzustellenden Zuordnungsregel bzw. Abbildungsvorschrift ein Wert der Skala zugeordnet, wobei der zugeordnete Skalenwert den Farbgüteindikator API für das Karosseriebauteil bzw. das Anbauteil angibt. Dabei wird für je ein Oberflächenelement ein jeweiliger Farbgüteindikator API bestimmt, d.h. es gibt hier einen $API_{OEM}$ und einen davon unabhängig bestimmten $API_{ASP}$.

Ferner wird ein Farbgüteindikator CHI bestimmt, wobei für jede Messgeometrie und jede Lichtquelle je ein dritter Funktionswert als Absolutwert einer jeweiligen Differenz zwischen einer bestimmten und normierten Farbdifferenz von mindestens einem von einem Karosseriebauer lackierten Oberflächenelement OEM einer Fahrzeugkarosserie und einer bestimmten und normierten Farbdifferenz von mindestens einem von einem Fahrzeugzulieferer lackierten Oberflächenelement ASP eines Karosserieanbauteils aus Plastik und ggf. als Absolutwert einer jeweiligen Differenz zwischen einem bestimmten und normierten Glitzerabstand von OEM und einem bestimmten und normierten Glitzerabstand von ASP und ggf. als Absolutwert einer jeweiligen Differenz zwischen einer normierten und bereinigten Grobheitsabweichung von OEM und einer normierten und bereinigten Grobheitsabweichung von ASP bestimmt wird. Die sich für die Anzahl Messgeometrien und die Anzahl Lichtquellen ergebenden dritten Funktionswerte werden gemäß vorgegebenen Berechnungsanweisungen, d. h. gemäß der vorgegebenen Abbildungsvorschrift, wie bspw. gemäß Tabelle aus Figur 2 miteinander verrechnet und das sich daraus ergebende Resultat wird ebenfalls mittels der im Voraus bereitzustellenden Zuordnungsregel bzw. Abbildungsvorschrift "rating" einem Wert der Skala zugeordnet, und der zugeordnete Skalenwert entspricht dem Wert des Farbgüteindikators CHI.

In der Regel umspannen die jeweiligen Skalenwerte ein Intervall von 1 bis 8 bzw. Q1 bis Q8, wobei der Wert 1 eine jeweils schlechteste und der Wert 8 eine jeweils beste Einstufung darstellt. Neben den drei Farbgüteindikatoren BPI, API und CHI kann ausgehend von den bereinigten Farbdifferenzen in einem Schritt 6_2 ein weiterer Farbgüteindikator LPI bestimmt werden. Der Farbgüteindikator LPI verwendet gegenüber den voranstehend erläuterten Farbgüteindikatoren BPI, API und CHI fest vorgegebene Normierungskonstanten bzw. -faktoren, die für die Spektralgeometrien wie folgt festgelegt sind:

W(LIP) = (1.0, 0.2, 0.2, 0.8, 0.2) zur Wichtung bzw. Normierung der Koordinaten L*,a*,b*,C*,H*. Auf Basis der so in einem Schritt 5/6_2 gewichteten und bereinigten Farbdifferenzen (und ggf. der Glitzerabstände und ggf. der Grobheitsabweichungen) wird der Farbgüteindikator LPI durch mindestens einen für jede Messgeometrie und jede Lichtart bestimmten vierten Funktionswert auf Basis einer Varianz bzw. als Varianz der bereinigten und normierten Farbdifferenzen (und ggf. der Glitzerabstände und ggf. der Grobheitsabweichungen) von mindestens einem von einem Karosseriebauer lackierten Oberflächenelement OEM in einer Fahrzeugkarosserie bzw. der bereinigten und normierten Farbdifferenzen (und ggf. der Glitzerabstände und ggf. der Grobheitsabweichungen) von mindestens einem von einem Fahrzeugzulieferer lackierten Oberflächenelement ASP eines Karossieranbauteils aus Plastik bestimmt. Die sich für die Anzahl Messgeometrien und die Anzahl Lichtquellen pro Oberflächenelement ergebenden vierten Funktionswerte werden pro Oberflächenelement gemäß vorgegebenen Berechnungsanweisungen bzw. gemäß der vorgegebenen Abbildungsvorschrift miteinander verrechnet und das daraus sich ergebende Resultat wird ebenfalls mittels der im Voraus bereitzustellenden Zuordnungsregel bzw. Abbildungsvorschrift einem Wert der Skala zugeordnet, wobei der Skalenwert den Wert des Farbgüteindikators LPI für die Karosserie bzw. das Karosserieanbauteil angibt. Der Farbgüteindikator LPI wird ebenfalls für Karosserie und jeweiliges Karosseriebauteil separat bestimmt.

Die Farbgüteindikatoren LPI, BPI, API und CHI basieren bei Zuordnung der jeweiligen farbgüteindikatorspezifischen Funktionswerte zu einem Skalenwert der für alle Farbgüteindikatoren identischen Skala auf der gleichen Abbildungsvorschrift, wie bspw. auf der aus der Tabelle aus Figur 2 hervorgehenden Abbildungsvorschrift.

In Figur 2 ist eine Tabelle 10 mit drei Spalten 13, 15 und 17 dargestellt. Die erste Spalte 13 gibt Skalenwerte Q an, die sich über eine Notenskala von 1 bis 8 aufspannen, wobei 1 eine schlechteste Qualität und 8 eine beste Qualität angibt.

Spalte 15 gibt gemäß der vorgegebenen Abbildungsvorschrift Zuordnungsregeln für die für die Anzahl Messgeometrien und für die Anzahl Lichtquellen jeweils berechneten farbgüteindikatorspezifischen Funktionswerte zu einem jeweiligen Skalenwert Q in Form von konkreten eindeutigen Gleichungen an. Da sich für alle Farbgüteindikatoren auf Basis der ihnen jeweils zugeordneten mathematischen Zusammenhänge als jeweilige Funktionswerte stets eine Art Farbabstand bzw. Glitzerabstand bzw. Grobheitsabweichung ergibt, werden diese sich für jeden Farbgüteindikator auf unterschiedliche Art und Weise, nämlich abhängig von dem für den jeweiligen farbgüteindikatorspezifischen mathematischen Zusammenhang, ergebenden Farbabstände bzw. Glitzerabstände bzw. Grobheitsabweichungen in der Tabelle aus Figur 2 und in der nachfolgenden dazugehörigen Beschreibung übergreifend mit $<d\overline{E}>$ bzw. $<d\overline{S}>$ bzw. $<d\overline{G}>$ bezeichnet. Um einem bestimmten Skalenwert zugeordnet zu werden, sind mindestens vier, höchstens zehn Bedingungen, die jeweils durch eine konkrete Gleichung definiert sind, zu erfüllen. Dabei soll der Begriff "Gleichung" weit ausgelegt werden, nämlich sowohl "Gleichung" im engeren Sinn als Aussage über die Gleichheit zweier Terme als auch "Ungleichung" als Größenvergleich zwischen zwei Termen umfassen.

Das heißt, damit für den zu betrachtenden Lack ein jeweiliger Farbgüteindikator der Mehrzahl von Farbgüteindikatoren einem bestimmten Skalenwert zugeordnet wird, müssen die für den Lack zuvor berechneten farbgüteindikatorspezifischen Funktionswerte die jeweiligen für den bestimmten Skalenwert durch die vorgegebene Abbildungsvorschrift "rating" festgelegten Bedingungen erfüllen.

In Zeile 1 von Spalte 15 ist bspw. festgelegt, dass, wenn eine Summe aller mittels eines jeweiligen farbindikatorspezifischen mathematischen Zusammenhangs berechneten Farbabstände (wobei der Begriff "Farbabstand", wie im vorangehenden Absatz erläutert, zu verstehen ist) für Messgeometrien zwischen 25° und 75°, d. h. für die Messgeometrie mit einem Messwinkel von 25°, für die Messgeometrie mit einem Messwinkel von 45° und für die Messgeometrie mit

$$\sum_{25}^{75} <d\overline{E}>$$

einem Messwinkel von 75°, d. h.                    (bzw. andere Formulierung: $<d\overline{E}>$ sum (25-75)) größer oder gleich einem Wert von 12 und jeder einzelne Farbabstand $<d\overline{E}>$ der Messgeometrien 25°, 45° und 75° bei Alleinbetrachtung größer oder gleich einem Wert von 6 ist, dem jeweiligen Lack für den jeweiligen Farbgüteindikator, der dem jeweiligen den verwendeten Farbabständen zugrundeliegenden mathematischen Zusammenhang zugeordnet ist, der Skalenwert 1 zugeordnet wird, d. h. der jeweilige Farbgüteindikator hat den Skalenwert 1. Da der Skalenwert 1 hier die niedrigste Qualitätsstufe darstellt, erfolgt auch eine Zuordnung zum Skalenwert Q = 1, wenn bspw. die Summe aller entsprechend

$$\sum_{25}^{75} <d\overline{E}>$$

berechneten Farbabstände für Messgeometrien zwischen 25° und 75°, d. h.                    größer oder gleich 12 ist, aber bspw. der berechnete Farbabstand für eine Messgeometrie der Messgeometrien 25°, 45° und 75° bei jeweiliger Alleinbetrachung kleiner 6 ist.

$$\sum_{25}^{75} <d\overline{E}>$$

Die Summe                    entspricht dabei in der Regel einer Aufsummierung der berechneten Farbabstände für die einzelnen Messgeometrien 25°, 45° und 75°, d. h. mit einem jeweiligen Messwinkel von 25°, 45° und 75°.

$$\sum_{15}^{110} <d\overline{E}>$$

Entsprechend ent-spricht                    einer Aufsummierung der berechneten Farbabstände für die einzelnen Messgeometrien 15°, 25°, 45°, 75° und 110°, d. h. für Messwinkel 15°, 25°, 45°, 75° und 110°.

Bei allen höheren Qualitätsstufen bzw. Skalenwerten, d. h. Q = 2, 3, 4, 5, 6, 7, und 8 müssen jeweils alle Qualitätskriterien bzw. Gleichungen, die den jeweiligen Qualitätsstufen bzw. Skalenwerten zugeordnet sind, von den berechneten Farbabständen $<d\overline{E}>$ und bei Q = 7 oder Q = 8 zusätzlich von den berechneten Glitzerabständen $<d\overline{S}>$ und Grobheitsabweichungen $<d\overline{G}>$ erfüllt sein, damit ein entsprechender Farbgüteindikator für den zugrundeliegenden Lack bzw. der Lackcharge eine jeweilige Qualitätsstufe bzw. eine entsprechende Kennzahl bzw. einen entsprechenden Skalenwert Q = 2, 3, 4, 5, 6, 7 oder 8 erhält. Dabei bedeutet die Schreibweise $<d\overline{E}>$ 15, 25, 45, 75, 110 eine Betrachtung aller für den jeweiligen Farbgüteindikator gemäß dem dem jeweiligen Farbgüteindikator zugeordneten mathematischen Zusammenhang berechneten Farbabstände für einen Messwinkel von 15°, einen Messwinkel von 25°, einen Messwinkel von 45°, einen Messwinkel von 75° und einen Messwinkel von 110°. Entsprechend bedeutet $<d\overline{S}>$ 15, 45, 75 eine Betrachtung aller gemäß dem dem jeweiligen Farbgüteindikator zugeordneten mathematischen Zusammenhang berechneten Glitzerabstände für einen Messwinkel von 15°, einen Messwinkel von 45° und einen Messwinkel von 75°.

Da bei Effektlacken auch Glitzerabstände und Grobheitsabweichungen berücksichtigt werden sollen, ist vorgesehen, dass insbesondere bei hohen Kennzahlen, die einer hohen Qualität entsprechen, verschärfte, d. h. zusätzliche Bedingungen gelten. Dies bedeutet, dass, um bspw. jeweiligen Kriterien für eine Zuordnung zum Skalenwert Q mit einem Wert von 7 zu erfüllen, für einen jeweiligen Effektlack kein für Messgeometrien zwischen 15° und 110° jeweilig

berechneter Farbabstand <d$\overline{E}$> einen Wert größer oder gleich 1,73 aufweisen darf. Entsprechend muss jeder der zu den Messgeometrien 15°, 25°, 45°, 75° und 110° auf Basis eines jeweiligen farbgüteindikatorspezifischen Zusammenhangs berechnete Farbabstand <d$\overline{E}$> kleiner 1,73 sein. Zusätzlich darf ein auf Basis eines jeweiligen farbgüteindikatorspezifischen Zusammenhangs berechneter Glitzerabstand <d$\overline{S}$> für keine der Messgeometrien 15°, 45° und 75° größer oder gleich einem Wert von 1,73 sein. Weiterhin darf eine auf Basis eines jeweiligen farbgüteindikatorspezifischen Zusammenhangs berechnete Grobheitsabweichung <d$\overline{G}$> nicht größer oder gleich einem Wert von 1,73 sein.

Da Unilacke häufig einen Metamerieeffekt, d. h. eine unterschiedliche Farbe bzw. Graustufe bei Beleuchtung mit unterschiedlichen Lichtarten zeigen, sind für Unilacke eigene Zuordnungsregeln vorgesehen, wie in Spalte 17 dargestellt.

Zur Zuordnung eines jeweiligen Farbgüteindikators für einen Unilack zu einem jeweiligen Skalenwert Q wird ein maximaler Wert eines gemäß dem dem Farbgüteindikator zugeordneten mathematischen Zusammenhang berechneten Farbabstands <d$\overline{E}$> bzw. eines Graustufenunterschieds der jeweils unter verschiedenen Lichtarten, bspw. unter der Lichtart D64 und der Lichtart TL84, für jeweils eine Messgeometrie von bspw. 45° vermessen wurde, berechnet. Dies bedeutet, dass einem jeweiligen Farbgüteindikator für den Unilack bspw. ein Skalenwert Q von 1 zugeordnet wird, wenn der jeweilige auf Basis des farbgüteindikatorspezifischen mathematischen Zusammenhangs berechnete Farbabstand <d$\overline{E}$> einen maximalen Wert unter den Lichtarten D64 und TL84 von größer oder gleich einem Wert von 6 aufweist.

Für eine Zuordnung zu anderen Skalenwerten Q sind entsprechende Kriterien in Spalten 15 (für Effektlacke) und 17 (für Unilacke) der Tabelle 10 definiert.

Bei Unilacken gilt bspw: Ist der maximale Wert des Farbabstands <d$\overline{E}$> kleiner 6, aber größer oder gleich 4,5, erhält der jeweilige Farbgüteindikator den Wert 2; ist der maximale Wert des Farbabstands <d$\overline{E}$> kleiner 4,5, aber größer oder gleich 3, erhält der jeweilige Farbgüteindikator den Wert 3; ist der maximale Wert des Farbabstands <d$\overline{E}$> kleiner 3, aber größer oder gleich 2, erhält der jeweilige Farbgüteindikator den Wert 4; ist der maximale Wert des Farbabstands <d$\overline{E}$> kleiner 2, aber größer oder gleich 1,7, erhält der jeweilige Farbgüteindikator den Wert 5; ist der maximale Wert des Farbabstands <d$\overline{E}$> kleiner 1,7, aber größer oder gleich 1,4, erhält der jeweilige Farbgüteindikator den Wert 6; ist der maximale Wert des Farbabstands <d$\overline{E}$> kleiner 1,4, aber größer oder gleich 1,0, erhält der jeweilige Farbgüteindikator den Wert 7; ist der maximale Wert des Farbabstands <d$\overline{E}$> kleiner 1,0, erhält der jeweilige Farbgüteindikator den Wert 8.

**Patentansprüche**

1. Verfahren zum Bestimmen einer Mehrzahl von unterschiedlichen Farbgüteindikatoren für eine Farbkontrolle eines Lacks, bei dem farbmetrische Koordinaten einer Farbreferenz und farbmetrische Koordinaten des Lacks für eine Mehrzahl von unterschiedlichen mit dem Lack lackierten Oberflächenelementen und mit dem Lack durch einen Hersteller des Lacks lackierten Kontrolloberflächenelementen je mit einem Spektralphotometer für eine Anzahl Messgeometrien und eine Anzahl Lichtquellen ermittelt werden, wobei für jede Messgeometrie der Anzahl Messgeometrien und jede Lichtquelle der Anzahl Lichtquellen jeweilige Farbdifferenzen aus den farbmetrischen Koordinaten der Farbreferenz und den jeweiligen farbmetrischen Koordinaten des Lacks für die Mehrzahl der mit dem Lack lackierten Oberflächenelemente und der mit dem Lack lackierten Kontrolloberflächenelemente berechnet werden, wobei die jeweiligen farbmetrischen Koordinaten mit je einem Gewichtungsfaktor normiert werden, wobei jeder der Mehrzahl der Farbgüteindikatoren mittels einer durch eine vorgegebene für alle Farbgüteindikatoren identische Abbildungsvorschrift definierten Abbildung von Funktionswerten, die für die Anzahl Messgeometrien und die Anzahl Lichtquellen jeweilig mittels eines für den jeweiligen Farbgüteindikator spezifischen mathematischen Zusammenhangs zwischen Farbdifferenzen von mindestens einem der Oberflächenelemente zu der Farbreferenz bestimmt werden, auf einen Skalenwert einer vorgegebenen für alle Farbgüteindikatoren identischen Skala bestimmt wird, wobei der mathematische Zusammenhang für mindestens einen der Farbgüteindikatoren einem mathematischen Zusammenhang zwischen Farbdifferenzen zu der Farbreferenz von mindestens einem der Oberflächenelemente und einem der Kontrolloberflächenelemente entspricht.

2. Verfahren nach Anspruch 1, bei dem die Farbdifferenzen für den Lack in Abhängigkeit einer Chromatizität des Lacks mit den folgenden jeweiligen Farbdifferenzformeln berechnet werden:

Achromatischer Bereich:

$$<dE> = (<dL>^2 + <da>^2 + <db>^2)^{1/2}$$

Chromatischer Bereich:

$$<dE> = (<dL>^2 + <dC>^2 + <dH>^2)^{1/2},$$

wobei <dE> eine normierte Farbdifferenz, <dL> = dL*/$S_L$ eine normierte Helligkeit mit Helligkeit L* und Normierungsfaktor $S_L$, <da> = da*/$S_a$, <db> = db*/$S_b$ normierte Farbwerte mit Farbwerten a*, b* und Normierungsfaktoren $S_a$, $S_b$,

<dC> = dC*/$S_c$ eine normierte Buntheit mit Buntheit C* und Normierungsfaktor $S_C$ und <dH> = dH*/$S_H$ ein normierter Farbtonwinkel mit Farbtonwinkel H* und

Normierungsfaktor $S_H$ angeben, wobei die Normierungsfaktoren in Abhängigkeit von dem Lack und/oder der jeweiligen Messgeometrie und/oder einer jeweiligen Beschaffenheit eines Untergrunds, auf den der Lack aufzutragen ist,

um ein jeweiliges mit dem Lack lackiertes Oberflächenelement bereitzustellen, gewählt werden.

3. Verfahren nach Anspruch 1 oder 2, bei dem die Mehrzahl der mit dem Lack lackierten Oberflächenelemente mindestens umfasst: von einem Karosseriebauer lackiertes Oberflächenelement OEM einer Fahrzeugkarosserie, von einem Fahrzeugzulieferer lackiertes Oberflächenelement ASP eines Karosserieanbauteils aus Plastik; und die Mehrzahl der mit dem Lack lackierten Kontrolloberflächenelemente mindestens umfasst: durch einen Hersteller des Lacks lackiertes Kontrolloberflächenelement OEM_QC für die Fahrzeugkarosserie, durch den Hersteller des Lacks lackiertes Kontrolloberflächenelement ASP_QC für das Karosserieanbauteil aus Plastik.

4. Verfahren nach einem der voranstehenden Ansprüche, bei dem die jeweiligen farbmetrischen Koordinaten jeweils auf Basis jeweiliger Reflexionswerte der Farbreferenz und der Mehrzahl der lackierten Oberflächenelemente bzw. der Kontrolloberflächenelemente bestimmt werden.

5. Verfahren nach einem der voranstehenden Ansprüche, bei dem die jeweiligen Farbdifferenzen je nach zu bestimmendem Farbgüteindikator mit einem von zwei verschiedenen Toleranzwerten normiert werden, wobei ein erster Toleranzwert für eine Serie von mit dem Lack einer Charge lackierten Oberflächenelementen bestimmt und ein zweiter Toleranzwert als Chargentoleranz für die Charge des Lacks fest vorgegeben wird, wobei sich der erste Toleranzwert durch Multiplikation des zweiten Toleranzwerts mit einem Faktor g ergibt, wobei der Faktor g durch die Norm DIN 6175-2 vorgegeben ist.

6. Verfahren nach Anspruch 5, bei dem diejenigen der mit dem Lack einer Charge lackierten Oberflächenelemente aus der Serie ausgezählt und aussortiert werden, deren jeweilige Farbdifferenzen jeweils größer als der erste Toleranzwert sind, und auf Basis der ausgezählten Anzahl der aussortierten Oberflächenelemente im Verhältnis zu einer Gesamtzahl der mit dem Lack der Charge lackierten Oberflächenelemente aus der Serie ein Serien-Farbgüteindikator CPI bestimmt wird, wobei der Anteil der aussortierten Oberflächenelemente gemäß einer vorgegebenen Zuordnungsvorschrift einem Skalenwert der vorgegebenen Skala zugeordnet wird, wobei der Skalenwert den Wert des Serien-Farbgüteindikators CPI angibt.

7. Verfahren nach einem der voranstehenden Ansprüche, bei dem die Anzahl Messgeometrien mindestens umfasst: je eine Messanordnung mit einer 45°-Beleuchtung und einem Messwinkel von -15°, 15°, 25°, 45°, 75° und 110° und/oder je eine Messanordnung mit einem Messwinkel von 90° und einer 15°-, 45°-, 75°- und diffusen Beleuchtung.

8. Verfahren nach einem der voranstehenden Ansprüche, bei dem auf für eine Serie von mit dem Lack einer Charge lackierten Oberflächenelementen bestimmte jeweilige Farbdifferenzen ein vorgegebenes statistisches Analyseverfahren durchgeführt wird, Ausreißer aussortiert und bereinigte jeweilige Farbdifferenzen bereitgestellt werden.

9. Verfahren nach Anspruch 8, bei dem zur Bestimmung eines Farbgüteindikators BPI der Mehrzahl von Farbgüteindikatoren für die Anzahl Messgeometrien und die Anzahl Lichtquellen je ein erster Funktionswert als Mittelwert von bereinigten und normierten Farbdifferenzen von mindestens einem von einem Karosseriebauer lackierten Oberflächenelement OEM einer Fahrzeugkarosserie und/oder eines Mittelwerts von bereinigten und normierten Farbdifferenzen von mindestens einem von einem Fahrzeugzulieferer lackierten Oberflächenelement ASP eines Karosserieanbauteils aus Plastik bestimmt wird und den je Oberflächenelement bestimmten jeweiligen ersten Funktionswerten mittels der vorgegebenen Abbildungsvorschrift ein Skalenwert der Skala zugeordnet wird.

10. Verfahren nach einem der Ansprüche 8 oder 9, bei dem zur Bestimmung eines Farbgüteindikators API der Mehrzahl von Farbgüteindikatoren für die Anzahl Messgeometrien und die Anzahl Lichtquellen je ein zweiter Funktionswert als Absolutwert einer Differenz zwischen einer normierten Farbdifferenz eines durch einen Hersteller des Lacks lackierten Kontrolloberflächenelements OEM_QC für die Fahrzeugkarosserie bzw. eines durch den Hersteller des Lacks lackierten Kontrolloberflächenelements ASP_QC für das Karosserieanbauteil aus Plastik und einem Mittelwert von bereinigten und normierten Farbdifferenzen von mindestens einem von einem Karosseriebauer lackierten Oberflächenelement OEM der Fahrzeugkarosserie bzw. einem Mittelwert von bereinigten und normierten Farbdifferenzen von mindestens einem von einem Fahrzeugzulieferer lackierten Oberflächenelement ASP des Karosserieanbauteils aus Plastik bestimmt wird und den je Oberflächenelement bestimmten jeweiligen zweiten Funktionswerten mittels der vorgegebenen Abbildungsvorschrift jeweils ein Skalenwert der Skala zugeordnet wird.

**11.** Verfahren nach einem der Ansprüche 8 bis 10, bei dem zur Bestimmung eines Farbgüteindikator CHI der Mehrzahl von Farbgüteindikatoren für die Anzahl Messgeometrien und die Anzahl Lichtquellen je ein dritter Funktionswert als Absolutwert einer Differenz zwischen einem Mittelwert von bereinigten und normierten Farbdifferenzen von mindestens einem von einem Karosseriebauer lackierten Oberflächenelement OEM einer Fahrzeugkarosserie und einem Mittelwert von bereinigten und normierten Farbdifferenzen von einem von einem Fahrzeugzulieferer lackierten Oberflächenelement ASP eines Karosserieanbauteils aus Plastik bestimmt wird und den dritten Funktionswerten mittels der vorgegebenen Abbildungsvorschrift ein Skalenwert der Skala zugeordnet wird.

**12.** Verfahren nach einem der Ansprüche 9 bis 11, bei dem die farbmetrischen Konstanten jeweils mit einer für die Charge des Lacks fest vorgegebenen Chargentoleranz gewichtet werden.

**13.** Verfahren nach einem der Ansprüche 8 bis 11, bei dem zur Bestimmung eines Farbgüteindikators LPI der Mehrzahl von Farbgüteindikatoren für die Anzahl Messgeometrien und die Anzahl Lichtquellen je ein vierter Funktionswert als Varianz von bereinigten und normierten Farbdifferenzen von einem von einem Karosseriebauer lackierten Oberflächenelement OEM einer Fahrzeugkarosserie bzw. von bereinigten und normierten Farbdifferenzen von einem von einem Fahrzeugzulieferer lackierten Oberflächenelement ASP eines Karosserieanbauteils aus Plastik bestimmt wird und den je Oberflächenelement bestimmten jeweiligen vierten Funktionswerten mittels der vorgegebenen Abbildungsvorschrift ein Skalenwert der Skala zugeordnet wird.

**14.** Verfahren nach Anspruch 13, bei dem die farbmetrischen Konstanten L*, a*, b*, C*, H* wie folgt jeweils gewichtet werden: L* mit 1.0, a* mit 0.2, b* mit 0.2, C* mit 0.8, H* mit 0.2.

**15.** Computerprogramm mit Programmcodemitteln, die dazu ausgelegt sind, alle Schritte eines Verfahrens nach einem der Ansprüche 1 bis 14 durchzuführen, wenn das Computerprogramm auf einem Computer oder einer entsprechenden Rechnereinheit in einem System nach Anspruch 16 ausgeführt wird.

**16.** System zum Bestimmen einer Mehrzahl von unterschiedlichen Farbgüteindikatoren für eine Farbkontrolle eines Lacks, wobei das System mindestens umfasst: ein Spektralphotometer, das dazu ausgelegt ist, für eine Anzahl Messgeometrien und eine Anzahl Lichtquellen farbmetrische Koordinaten einer Farbreferenz und farbmetrische Koordinaten des Lacks für eine Mehrzahl von unterschiedlichen mit dem Lack lackierten Oberflächenelementen und mit dem Lack durch einen Hersteller des Lacks lackierten Kontrolloberflächenelementen zu ermitteln, und eine Rechnereinheit, die dazu konfiguriert ist, für jede Messgeometrie der Anzahl Messgeometrien und jede Lichtquelle der Anzahl Lichtquellen jeweilige Farbdifferenzen bzw. Farbabstände aus den farbmetrischen Koordinaten der Farbreferenz und den jeweiligen farbmetrischen Koordinaten des Lacks für die Mehrzahl der mit dem Lack lackierten Oberflächenelementen und der mit dem Lack lackierten Kontrolloberflächenelementen zu berechnen, die jeweiligen farbmetrischen Koordinaten mit je einem Gewichtungsfaktor zu normieren, für die Anzahl Messgeometrien und die Anzahl Lichtquellen jeweilig mittels eines für einen jeweiligen Farbgüteindikator spezifischen mathematischen Zusammenhangs zwischen Farbdifferenzen zu der Farbreferenz von mindestens einem der Oberflächenelemente farbgüteindikatorspezifische Funktionswerte zu bestimmen, und jeden der Mehrzahl der Farbgüteindikatoren mittels einer durch eine vorgegebene für alle Farbgüteindikatoren identische Abbildungsvorschrift definierten Abbildung der farbgüteindikatorspezifischen Funktionswerte, die für die Anzahl Messgeometrien und die Anzahl Lichtquellen jeweilig mittels des für den jeweiligen Farbgüteindikator spezifischen mathematischen Zusammenhangs zwischen Farbdifferenzen zu der Farbreferenz von mindestens einem der Oberflächenelemente bestimmt wurden, auf einen Skalenwert einer vorgegebenen für alle Farbgüteindikatoren identischen Skala zu bestimmen, wobei der mathematische Zusammenhang für mindestens einen der Farbgüteindikatoren einem mathematischen Zusammenhang zwischen Farbdifferenzen zu der Farbreferenz von mindestens einem der Oberflächenelemente und einem der Kontrolloberflächenelemente entspricht.

**Claims**

1. Process for determining a plurality of different color quality indicators for a color control of a coating, wherein colorimetric coordinates of a color reference and colorimetric coordinates of the coating are ascertained for a plurality of different surface elements coated with the coating and control surface elements coated with the coating by a producer of the coating, in each case with a spectrophotometer for a number of measurement geometries and a number of light sources, wherein, for each measurement geometry of the number of measurement geometries and each light source of the number of light sources, respective color differences are calculated from the colorimetric coordinates of the color reference and the respective colorimetric coordinates of the coating for the plurality of the surface elements coated with the coating and of the control surface elements coated with the coating, wherein the respective colorimetric coordinates are normalized with respectively one weighting factor, wherein each of the plurality of color quality indicators is determined by means of a mapping, defined by a predetermined mapping prescription which is identical for all color quality indicators, of functional values onto a scale value of a predetermined scale which is identical for all color quality indicators, said functional values being determined for the number of measurement geometries and the number of light sources in each case by means of a mathematical relationship, specific to the respective color quality indicator, between color differences (in relation to the color reference) of at least one of the surface elements, wherein the mathematical relationship for at least one of the color quality indicators corresponds to a mathematical relationship between color differences in relation to the color reference of at least one of the surface elements and one of the control surface elements.

2. Process according to Claim 1, wherein the color differences for the coating are calculated depending on a chromaticity of the coating using the following respective color difference formulas:

    achromatic region:

$$<dE> = (<dL>^2 + <da>^2 + <db>^2)^{1/2}$$

    chromatic region:

$$<dE> = (<dL>^2 + <dC>^2 + <dH>^2)^{1/2},$$

    where $<dE>$ denotes a normalized color difference, $<dL> = dL^*/S_L$ denotes a normalized lightness with lightness $L^*$ and normalization factor $S_L$, $<da> = da^*/S_a$, $<db> = db^*/S_b$ denote normalized color values with color values $a^*$, $b^*$ and normalization factors $S_a$, $S_b$, $<dC> = dC^*/S_C$ denotes a normalized chroma with chroma $C^*$ and normalization factor $S_C$ and $<dH> = dH^*/S_H$ denotes a normalized hue angle with hue angle $H^*$ and normalization factor $S_H$, wherein the normalization factors are chosen depending on the coating and/or the respective measurement geometry and/or a respective condition of a substrate on which the coating should be applied in order to provide a respective surface element coated with the coating.

3. Process according to Claim 1 or 2, wherein the plurality of surface elements coated with the coating at least comprises: a surface element OEM of a vehicle body coated by a car body maker, a surface element ASP of a car body attachment, made of plastic and coated by a vehicle supplier; and the plurality of control surface elements coated with the coating at least comprises: a control surface element OEM_QC for the vehicle body coated by a producer of the coating, a control surface element ASP_QC for the car body attachment, made of plastic and coated by the producer of the coating.

4. Process according to any one of the preceding claims, wherein the respective colorimetric coordinates are determined in each case on the basis of respective reflection values of the color reference and the plurality of coated surface elements or of control surface elements.

5. Process according to any one of the preceding claims, wherein the respective color differences are normalized with one of two different tolerance values, depending on the color quality indicator to be determined, wherein a first tolerance value is determined for a series of surface elements coated with the coating of one batch and a second tolerance value is fixedly predetermined as batch tolerance for the batch of the coating, wherein the first tolerance value emerges from multiplying the second tolerance value by a factor g, where the factor g is predetermined by the DIN 6175-2 standard.

6. Process according to Claim 5, wherein those of the surface elements of the series coated with the coating of a batch, whose respective color differences are greater than the first tolerance value in each case, are counted and removed and a series color quality indicator CPI is determined on the basis of the counted number of removed surface elements in relation to an overall number of the surface elements of the series coated with the coating of the batch, wherein the portion of removed surface elements is assigned to a scale value of the predetermined scale according to a predetermined assignment prescription, wherein the scale value specifies the value of the series color quality indicator CPI.

7. Process according to any one of the preceding claims, wherein the number of measurement geometries at least comprises: respectively one measurement arrangement with a 45° illumination and a measurement angle of -15°, 15°, 25°, 45°, 75° and 110° and/or respectively one measurement arrangement with a measurement angle of 90° and a 15° illumination, 45° illumination, 75° illumination and diffuse illumination.

8. Process according to any one of the preceding claims, wherein a predetermined statistical analysis process is performed on respective color differences determined for a series of surface elements coated with the coating of a batch, outliers are removed and purged respective color differences are provided.

9. Process according to Claim 8, wherein, for the purposes of determining a color quality indicator BPI of the plurality of color quality indicators for the number of measurement geometries and the number of light sources, respectively one first functional value is determined as a mean value of purged and normalized color differences of at least one surface element OEM of a vehicle body coated by a car body maker and/or a mean value of purged and normalized color differences of at least one surface element ASP of a car body attachment, made of plastic and coated by a vehicle supplier, and a scale value of the scale is assigned to the respective first functional values determined for each surface element by means of the predetermined mapping prescription.

10. Process according to either of Claims 8 and 9, wherein, for the purposes of determining a color quality indicator API of the plurality of color quality indicators for the number of measurement geometries and the number of light sources, respectively one second functional value is determined as an absolute value of a difference between a normalized color difference of a control surface element OEM_QC for the vehicle body coated by a producer of the coating or a control surface element ASP_QC for the car body attachment, made of plastic and coated by the producer of the coating, and a mean value of purged and normalized color differences of at least one surface element OEM of the vehicle body coated by a car body maker or a mean value of purged and normalized color differences of at least one surface element ASP of the car body attachment, made of plastic and coated by a vehicle supplier, and respectively one scale value of the scale is assigned to the respective second functional values determined for each surface element by means of the predetermined mapping prescription.

11. Process according to any one of Claims 8 to 10, wherein, for the purposes of determining a color quality indicator CHI of the plurality of color quality indicators for the number of measurement geometries and the number of light sources, respectively one third functional value is determined as an absolute value of a difference between a mean value of purged and normalized color differences of at least one surface element OEM of a vehicle body coated by a car body maker and a mean value of purged and normalized color differences of a surface element ASP of a car body attachment, made of plastic and coated by a vehicle supplier, and a scale value of the scale is assigned to the third functional values by means of the predetermined mapping prescription.

12. Process according to any one of Claims 9 to 11, wherein the colorimetric constants are respectively weighted with a batch tolerance that is fixedly predetermined for the batch of the coating.

13. Process according to any one of Claims 8 to 11, wherein, for the purposes of determining a color quality indicator LPI of the plurality of color quality indicators for the number of measurement geometries and the number of light sources, respectively one fourth functional value is determined as a variance of purged and normalized color differences of a surface element OEM of a vehicle body coated by a car body maker or of purged and normalized color differences of a surface element ASP of a car body attachment, made of plastic and coated by a vehicle supplier, and a scale value of the scale is assigned to the respective fourth functional values determined for each surface element by means of the predetermined mapping prescription.

14. Process according to Claim 13, wherein the colorimetric constants $L^*$, $a^*$, $b^*$, $C^*$, $H^*$ are respectively weighted as follows: $L^*$ with 1.0, $a^*$ with 0.2, $b^*$ with 0.2, $C^*$ with 0.8, $H^*$ with 0.2.

**15.** Computer program with program code means, which are designed to perform all steps of a process according to any one of Claims 1 to 14 when the computer program is executed on a computer or a corresponding computational unit in a system according to Claim 16.

**16.** System for determining a plurality of different color quality indicators for a color control of a coating, wherein the system at least comprises: a spectrophotometer which is designed to ascertain, for a number of measurement geometries and a number of light sources, colorimetric coordinates of a color reference and colorimetric coordinates of the coating for a plurality of different surface elements coated with the coating and control surface elements coated with the coating by a producer of the coating, and a computational unit which is configured to calculate, for each measurement geometry of the number of measurement geometries and each light source of the number of light sources, respective color differences from the colorimetric coordinates of the color reference and the respective colorimetric coordinates of the coating for the plurality of the surface elements coated with the coating and of the control surface elements coated with the coating, to normalize the respective colorimetric coordinates with respectively one weighting factor, to determine color-quality-indicator-specific functional values for the number of measurement geometries and the number of light sources, respectively by means of a mathematical relationship, specific to a respective color quality indicator, between color differences in relation to the color reference of at least one of the surface elements, and to determine each of the plurality of color quality indicators by means of a mapping, defined by a predetermined mapping prescription which is identical for all color quality indicators, of the color-quality-indicator-specific functional values onto a scale value of a predetermined scale which is identical for all color quality indicators, said functional values having been determined for the number of measurement geometries and the number of light sources in each case by means of the mathematical relationship, specific to the respective color quality indicator, between color differences in relation to the color reference of at least one of the surface elements, wherein the mathematical relationship for at least one of the color quality indicators corresponds to a mathematical relationship between color differences in relation to the color reference of at least one of the surface elements and one of the control surface elements.

## Revendications

**1.** Procédé de détermination d'une pluralité d'indicateurs de qualité de couleur différents pour un contrôle de couleur d'un vernis, dans lequel les coordonnées colorimétriques d'une référence de couleur et les coordonnées colorimétriques du vernis déterminées pour une pluralité de différents éléments de surface vernis à l'aide du vernis et d'éléments de surface de contrôle vernis à l'aide du vernis par un fabricant du vernis sont respectivement déterminées à l'aide d'un photomètre spectral pour un certain nombre de formes géométriques mesurées et un certain nombre de sources lumineuses, dans lequel, pour chaque forme géométrique mesurée du nombre de formes géométriques mesurées et chaque source lumineuse du nombre de sources lumineuses respectif, des différences de couleur sont calculées à partir des coordonnées colorimétriques de la référence de couleur et des coordonnées colorimétriques respectives du vernis pour la pluralité des éléments de surface vernis à l'aide du vernis et des éléments de surface de contrôle vernis à l'aide du vernis, dans lequel les coordonnées colorimétriques respectives sont respectivement normalisées par un facteur de pondération, dans lequel chacun des indicateurs parmi la pluralité des indicateurs de qualité de couleur sont déterminés au moyen d'une représentation de valeurs de fonction définie par une règle de représentation identique prédéfinie pour tous les indicateurs de qualité de couleur et sont déterminés pour le nombre de formes géométriques mesurées et le nombre de sources lumineuses de façon respective à l'aide d'un rapport mathématique spécifique à l'indicateur de qualité de couleur respectif entre les différences de couleur d'au moins un des éléments de surface par rapport à la référence de couleur, sur une valeur d'échelle d'une échelle identique prédéfinie pour tous les indicateurs de qualité de couleur, dans lequel le rapport mathématique pour au moins un des indicateurs de qualité de couleur correspond à un rapport mathématique entre les différences de couleur par rapport à la référence de couleur d'au moins un des éléments de surface et un des éléments de surface de contrôle.

**2.** Procédé selon la revendication 1, dans lequel les différences de couleur pour le vernis sont calculées en fonction d'une chromaticité du vernis avec les formules de différence de couleur respectives suivantes :

plage achromatique :

$$\langle dE \rangle = (\langle dL \rangle 2 + \langle da \rangle 2 + \langle db \rangle 2)1/2$$

plage chromatique :

$$<dE> = (<dL>2 + <dC>2 + <dH>2)1/2,$$

dans lequel <dE> est une différence de couleur normalisée, <dL> = dL*/SL est une luminosité normalisée avec comme luminosité L* et comme facteur de normalisation SL, <da> = da*/Sa, <db> = db*/Sb sont des valeurs de couleur normalisées avec des valeurs de couleur a*, b* et des facteurs de normalisation Sa, Sb, <dC> = dC*/Sc est une bigarrure normalisée avec la bigarrure C* et le facteur de normalisation Sc et <dH> = dH*/SH est un angle de nuance normalisé avec l'angle de nuance H* et le facteur de normalisation SH, dans lequel les facteurs de normalisation sont sélectionnés en fonction du vernis et/ou de la forme géométrique mesurée respective et/ou d'une nature respective d'un support sur lequel le vernis doit être appliqué afin de mettre à disposition un élément de surface respectivement verni à l'aide du vernis.

3. Procédé selon la revendication 1 ou 2, dans lequel la pluralité d'éléments de surface vernis à l'aide du vernis comprend au moins : un élément de surface OEM verni par un fabricant de carrosseries d'une carrosserie de véhicule, un élément de surface ASP verni par un fournisseur de véhicules d'un composant de carrosserie en plastique ; et la pluralité des éléments de surface vernis à l'aide du vernis de contrôle comprend au moins : un élément de surface de contrôle OEM_QC verni par un fabricant du vernis pour la carrosserie de véhicule, un élément de surface de contrôle ASP_QC verni par le fabricant du vernis pour le composant de carrosserie en plastique.

4. Procédé selon l'une quelconque des revendications précédentes, dans lequel les coordonnées colorimétriques respectives sont respectivement déterminées sur la base des valeurs de réflexion respectives de la référence de couleur et de la pluralité d'éléments de surface et/ou d'éléments de surface de contrôle vernis.

5. Procédé selon l'une quelconque des revendications précédentes, dans lequel les différences de couleur respectives sont normalisées respectivement en fonction d'un indicateur de qualité de couleur à déterminer à l'aide de l'une des deux différentes valeurs de tolérance, dans lequel une première valeur de tolérance est définie pour une série d'éléments de surface vernis à l'aide du vernis d'un lot et une deuxième valeur de tolérance est prédéfinie fixement sous la forme d'une tolérance de lot pour le lot du vernis, dans lequel la première valeur de tolérance est obtenue par multiplication de la deuxième valeur de tolérance et d'un facteur g, dans lequel le facteur g est prédéfini par la norme DIN 6175-2.

6. Procédé selon la revendication 5, dans lequel les éléments de surface vernis à l'aide du vernis d'un lot sont comptés et sortis de la série lorsque les différences de couleur respectives sont respectivement plus importantes que la première valeur de tolérance et un indicateur de qualité de couleur de série CPI est défini sur la base du nombre compté des éléments de surface sortis de la série par rapport à un nombre total des éléments de surface vernis à l'aide du vernis du lot, dans lequel la part des éléments de surface sortis est associé, en fonction d'une règle d'association prédéfinie, à une valeur d'échelle de l'échelle prédéfinie, dans lequel la valeur d'échelle indique la valeur de l'indicateur de qualité de couleur de série CPI.

7. Procédé selon l'une quelconque des revendications précédentes, dans lequel le nombre de formes géométriques mesurées comprend au moins : respectivement un dispositif de mesure avec un éclairage à 45° et un angle de mesure de -15°, 15°, 25°, 45°, 75° et 110° et/ou respectivement un dispositif de mesure avec un angle de mesure de 90° et un éclairage de 15°, 45°, 75° et diffus.

8. Procédé selon l'une quelconque des revendications précédentes, dans lequel un procédé d'analyse statistique prédéfini est réalisé pour les différences de couleur respectives définies pour une série d'éléments de surface vernis à l'aide du vernis d'un lot, dans lequel le cas aberrant est sorti et dans lequel les différences de couleur respectives purgées sont mises à disposition.

9. Procédé selon la revendication 8, dans lequel pour déterminer un indicateur de qualité de couleur BPI parmi la pluralité d'indicateurs de qualité de couleur pour le nombre de formes géométriques mesurées et le nombre de sources lumineuses, on détermine respectivement une première valeur de fonction sous la forme d'une valeur moyenne de différences de couleur normalisées et purgées d'au moins un élément de surface OEM d'une carrosserie de véhicule verni par un fabricant de carrosseries et/ou une valeur moyenne des différences de couleur normalisées et purgées d'au moins un élément de surface ASP d'un composant de carrosserie en plastique verni par un fournisseur de véhicule, une valeur d'échelle de l'échelle étant respectivement associée aux premières valeurs de fonction respectives définies par l'élément de surface à l'aide de la règle de représentation prédéfinie.

10. Procédé selon l'une quelconque des revendications 8 ou 9, dans lequel pour déterminer un indicateur de qualité de couleur API de la pluralité d'indicateurs de qualité de couleur pour le nombre de formes géométriques mesurées et le nombre de sources lumineuses, une deuxième valeur de fonction est respectivement déterminée sous la forme d'une valeur absolue d'une différence entre une différence de couleur normalisée d'un élément de surface de contrôle OEM_QC de la carrosserie de véhicule verni par un fabricant du vernis et/ou d'un élément de surface de contrôle ASP_QC du composant de carrosserie en plastique verni par le fabricant du vernis et entre une valeur moyenne des différences de couleur purgées et normalisées d'au moins un élément de surface OEM de la carrosserie de véhicule verni par un fabricant de carrosseries et/ou une valeur moyenne des différences de couleur purgées et normalisées d'au moins un élément de surface ASP du composant de carrosserie en plastique vernis par un fournisseur de véhicule et une valeur d'échelle de l'échelle est associée aux deuxièmes valeurs de fonction respectives pour l'élément de surface à l'aide de la règle de représentation prédéfinie.

11. Procédé selon l'une quelconque des revendications 8 à 10, dans lequel pour déterminer un indicateur de qualité de couleur CHI parmi la pluralité d'indicateurs de qualité de couleur pour le nombre de formes géométriques mesurées et le nombre de sources lumineuses, une troisième valeur de fonction est respectivement déterminée sous la forme d'une valeur absolue d'une différence entre une valeur moyenne de différences de couleur purgées et normalisées d'au moins un élément de surface OEM d'une carrosserie de véhicule verni par un fabricant de carrosseries et entre une valeur moyenne des différences de couleur purgées et normalisées d'un élément de surface ASP d'un composant de carrosserie en plastique verni par un fournisseur de véhicule et une valeur d'échelle de l'échelle est associée aux troisièmes valeurs de fonction à l'aide de la règle de représentation prédéfinie.

12. Procédé selon l'une quelconque des revendications 9 à 11, dans lequel les constantes colorimétriques sont respectivement pondérées au moyen d'une tolérance de lot fixement prédéfinie pour le lot du vernis.

13. Procédé selon l'une quelconque des revendications 8 à 11, dans lequel pour déterminer un indicateur de qualité de couleur LPI parmi la pluralité d'indicateurs de qualité de couleur pour le nombre de formes géométriques mesurées et le nombre de sources lumineuses, une quatrième valeur de fonction est respectivement déterminée sous la forme de la variance de différences de couleur purgées et normalisées d'un élément de surface OEM d'une carrosserie de véhicule verni par un fabricant de carrosseries et/ou de différences de couleur purgées et normalisées d'un élément de surface ASP de composant de carrosserie en plastique verni par un fournisseur de véhicule et une valeur d'échelle de l'échelle est associée aux quatrièmes valeurs de fonction respectives définies de l'élément de surface à l'aide de la règle de représentation prédéfinie.

14. Procédé selon la revendication 13, dans lequel les constantes colorimétriques L*, a*, b*, C*, H* sont respectivement pondérées de la façon suivante : L* par 1,0, a* par 0,2, b* par 0,2, C* par 0,8, H* par 0,2.

15. Programme informatique doté de moyens de code de programmation conçus pour exécuter toutes les étapes d'un procédé selon l'une quelconque des revendications 1 à 14 lorsque le programme informatique est exécuté sur un ordinateur ou une unité de calcul correspondante dans un système selon la revendication 16.

16. Système de détermination d'une pluralité d'indicateurs de qualité de couleur différents pour un contrôle de couleur d'un vernis, dans lequel le système comprend au moins : un photomètre spectral qui est conçu pour calculer, pour un certain nombre de formes géométriques mesurées et un certain nombre de sources lumineuses, les coordonnées colorimétriques d'une référence de couleur et les coordonnées colorimétriques du vernis pour une pluralité de différents éléments de surface vernis à l'aide du vernis et d'éléments de surface de contrôle vernis par un fabricant à l'aide du vernis et une unité de calcul conçue pour calculer, pour chaque forme géométrique mesurée du nombre de formes géométriques mesurées et chaque source lumineuse du nombre de sources lumineuses, les différences de couleur et/ou écartements de couleur respectifs à partir des coordonnées colorimétriques de la référence de couleur et des coordonnées colorimétriques respectives du vernis pour la pluralité d'éléments de surface vernis à l'aide du vernis et d'éléments de surface de contrôle vernis à l'aide du vernis, pour normaliser les coordonnées colorimétriques respectives au moyen respectivement d'un facteur de pondération, pour déterminer les valeurs de fonction spécifiques à l'indicateur de qualité de couleur pour le nombre de formes géométriques mesurées et le nombre de sources lumineuses de façon respective à l'aide d'un rapport mathématique spécifique à l'indicateur de qualité de couleur respectif entre les différences de couleur par rapport à la référence de couleur d'au moins un des éléments de surface et pour déterminer chaque pluralité d'indicateurs de qualité de couleur au moyen d'une représentation des valeurs de fonction spécifiques à l'indicateur de qualité de couleur définie par une règle de représentation identique prédéfinie pour tous les indicateurs de qualité de couleur et qui est déterminée pour le nombre de formes géométriques mesurées et le nombre de sources lumineuses de façon respective à l'aide du rapport mathématique spécifique à l'indicateur de qualité de couleur respectif entre les différences de couleur par rapport à la référence de couleur d'au moins un des éléments de surface, sur une valeur d'échelle d'une échelle identique prédéfinie pour tous les indicateurs de qualité de couleur, dans lequel le rapport mathématique pour au moins un des indicateurs de qualité de couleur correspond à un rapport mathématique entre les différences de couleur par rapport à la référence de couleur d'au moins un des éléments de surface et d'un des éléments de surface de contrôle.

1

$\mathcal{R}(\text{ref})_\phi \rightarrow (L^*,a^*,b^*)_{\phi,\ell,\text{Referenz}}$

$\mathcal{R}(\text{line})_{\phi,i,j} \rightarrow (L^*,a^*,b^*)_{\phi,\ell,i,j,\text{OEM,ASP}}$

$\mathcal{R}(\text{QC})_\phi \rightarrow (L^*,a^*,b^*)_{\text{o},\ell,\text{OEM\_QC, ASP\_QC}}$

2

$X^*_R \equiv (L^*,a^*,b^*)_{\phi,\ell,\text{Referenz}}$

$X^*_{\text{line},i,j} \equiv (L^*,a^*,b^*)_{\phi,\ell,i,j,\text{OEM,ASP}}$

$X^*_{QC} \equiv (L^*,a^*,b^*)_{\phi,\ell,\text{OEM\_QC, ASP\_QC}}$

$dX^*_{i,j} \equiv (L^*,a^*,b^*)_{\phi,\ell,i,\text{OEM,ASP}}$   3

$dX^*_{QC} \equiv (L^*,a^*,b^*)_{\phi,\ell,\text{OEM\_QC, ASP\_QC}}$

Ausreißer erkennen und aussortieren   5

Toleranzwert Ss   3/4

5/6_2

5/6_1

W(LPI)

Toleranzwert Sc

$\text{CPI}_{\text{OEM,ASP}} \equiv f(<dX_{ij}>_{Ss})_{\text{OEM,ASP}}$   4

$\text{BPI}_{\text{OEM,ASP}} = \text{Abbildung}(\text{avg} <dX>_{SC\,(\text{OEM,ASP,bereinigt})})$

$\text{API}_{\text{OEM,ASP}} = \text{Abbildung}(\text{ABS}(<dX>_{SC\,(\text{OEM\_QC, ASP\_QC})} - \text{avg} <dX>_{SC\,(\text{OEM,ASP,bereinigt})}))$

$\text{CHI} = \text{Abbildung}(\text{ABS}(\text{Mittelwert}<dX>_{SC,\text{OEM,bereinigt}} - \text{Mittelwert}<dX>_{SC,\text{ASP,bereinigt}}))$

6_2

6_1

$\text{LPI}_{\text{OEM,ASP}} = \text{Abbildung}\,[f(\sigma<dX>_{WLPI\,(\text{OEM,ASP, bereinigt})})]$

**Fig. 1**

| Q | | | | | |
|---|---|---|---|---|---|
| 1 | $<d\bar{E}>sum(25-75) > = 12$ | $<d\bar{E}>25, 45, 75 > = 6$ | | | $max<d\bar{E}>(CIE94, 45) > = 6$ |
| 2 | $<d\bar{E}>sum(25-75) < 12$ | $<d\bar{E}>25, 45, 75 < 6$ | | | $max<d\bar{E}>(CIE94, 45) < 6$ |
| 3 | $<d\bar{E}>sum(25-75) < 10$ | $<d\bar{E}>25, 45, 75 < 4,5$ | | | $max<d\bar{E}>(CIE94, 45) < 4,5$ |
| 4 | $<d\bar{E}>sum(25-75) < 6$ | $<d\bar{E}>25, 45, 75 < 3$ | | | $max<d\bar{E}>(CIE94, 45) < 3$ |
| 5 | $<d\bar{E}>sum(25-75) < 3,9$ | $<d\bar{E}>25, 45, 75 < 2$ | | | $max<d\bar{E}>(CIE94, 45) < 2$ |
| 6 | $<d\bar{E}>sum(15-110) < 6,5$ | $<d\bar{E}>15, 25, 45, 75, 110 < 2$ | | | $max<d\bar{E}>(CIE94, 45) < 1,7$ |
| 7 | | $<d\bar{E}>15, 25, 45, 75, 110 < 1,73$ | $<d\bar{S}>15, 45, 75 < 1,73$ | $<d\bar{G}> < 1,73$ | $max<d\bar{E}>(CIE94, 45) < 1,4$ |
| 8 | | $<d\bar{E}>-15, 15, 25, 45, 75, 110 < 1,41$ | $<d\bar{S}>15, 45, 75 < 1,41$ | $<d\bar{G}> < 1,41$ | $max<d\bar{E}>(CIE94, 45) < 1,0$ |

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013049796 A1
- DE 10208696 A1
- US 2011013176 A1
- WO 2016074801 A2